# EUROPÄISCHE PATENTSCHRIFT

(11) **EP 1 646 818 B1**
(45) Veröffentlichungstag und Bekanntmachung des Hinweises auf die Patenterteilung: **23.04.2008**
(21) Anmeldenummer: 04737389.9
(22) Anmeldetag: 16.07.2004
(51) Int. Cl.: F16L 3/10, F16L 3/233

(54) **BEFESTIGUNGSSYSTEM ZUM FESTBINDEN EINES LÄNGLICHEN GEGENSTANDES**
FIXING SYSTEM FOR BINDING A LONG OBJECT
SYSTEME DE FIXATION DESTINE A LIER UN OBJET ALLONGE

(30) Priorität: 17.07.2003 AT 11122003
(43) Veröffentlichungstag der Anmeldung: 19.04.2006
(73) Patentinhaber: STIWA-Fertigungstechnik Sticht Gesellschaft m.b.H, 4800 Attnang-Puchheim (AT)
(72) Erfinder: HEIML, Roland, A-4870 Vöcklamarkt (AT); STRAUSS, Harald, A-4812 Pinsdorf (AT)
(74) Vertreter: Secklehner, Günter
(86) Internationale Anmeldenummer: PCT/AT2004/000259
(87) Internationale Veröffentlichungsnummer: WO 2005/008115

(56) Entgegenhaltungen:
- EP-A- 0 666 444
- EP-A- 1 103 750
- US-A- 4 005 506
- US-B2- 6 499 199

## Beschreibung

Die Erfindung betrifft ein mehrteiliges Befestigungssystem zum Befestigen wenigstens eines länglichen Gegenstandes, wie im Oberbegriff des Anspruches 1 beschrieben.

Es sind aus dem Stand der Technik Befestigungssysteme, wie universale Schellen, bekannt, die allgemein zum Zusammenhalten von langgestreckten parallelen Gegenständen geeignet sind und werden insbesondere zum Bündeln einer Anzahl von dünnen elektrischen Leitern oder Kabeln zu einem Kabelstrang verwendet, um die Verlegung zu erleichtern und die Gefahr einer Beschädigung einzelner Leitungen oder Kabeln zu verringern. Bei einer Verlegung über größere Entfernungen ist es häufig erforderlich, die gebündelten Kabel- oder Leitungsstränge an einer oder mehreren Stellen aufzuhängen oder zu befestigen.

Aus der DE 695 00 214 T2 ist ein mehrteiliges Befestigungssystem, insbesondere eine universale Rohrklammer, bekannt, das einen klotzartigen Anschlussträger und an dessen jeweils einander gegenüberliegenden Seitenwänden mit einem Ende verbundene Spannbandteile aufweist. Der langgestreckte, biegsame erste Spannbandteil ist an einer der Breitseiten mit widerhakenförmigen Rastzähnen und der langgestreckte, biegsame zweite Spannbandteil mit einem Verschlusselement versehen. Dieses Verschlusselement ist am zweiten Spannbandteil befestigt und umfasst einen Verriegelungskopf mit einem Bandkanal und ein in den Bandkanal hineinragendes, beim Hindurchziehen des ersten Spannbandteiles durch den Bandkanal mit einem Teil der Rastzähne in Eingriff tretendes, selbsttätig wirkendes Verriegelungselement, wobei das Verriegelungselement mit zu den Rastzähnen komplementären Vertiefungen versehen ist. Durch Anziehen an dem freien Ende des ersten Spannbandteiles werden die beiden Spannbandteile an den Außenumfang des festzubindenden Gegenstandes angelegt und dieser Gegenstand gegen den Anschlussträger gepresst. Zum Festbinden des wenigstens einen Gegenstandes am Anschlussträger ist es erforderlich, mit jeder Hand jeweils das freie Ende der beiden Spannbandteile zu erfassen und mit der ersten Hand das Verschlusselement am zweiten Spannbandteil positioniert zu halten und mit der zweiten Hand das freie Ende des ersten Spannbandteiles in den Bandkanal einzuführen, sodass während der Montage des Gegenstandes zusätzliche Hilfestellungen oder Haltemittel zum Festhalten des Gegenstandes erforderlich sind, worin auch der Nachteil dieses bekannten Befestigungssystems beruht.

Ein mehrteiliges Befestigungssystem zum Festbinden eines zu einem Bündel aufgerollten länglichen Gegenstandes ist aus der US 6,499,199 B2 bekannt, das einen Anschlussträger und ein um das Bündel tangential geführtes und dieses teilweise umschlingendes, flexibles Spannband umfasst. Der Anschlussträger weist eine Aussparung zum Halten eines Endes vom aufgerollten Gegenstand und beidseits zu dieser an Haltearmen seitlich vorragende Seitenteile auf. Zumindest einer der Seitenteil ist mit einer Ausnehmung zum Durchtritt des flexiblen Spannbandes versehen und bildet ein Umlenkmittel aus, wobei das erste Ende des Spannbandes ausgehend von der dem zu bündelnden Gegenstand zugewandten Seite am Umlenkmittel umschlingend geführt wird. Das zweite Ende des Spannbandes ist am anderen Seitenteil befestigt. Nachdem das eine Ende vom Gegenstand in der Aussparung klemmend gehalten ist, wird ein Abrollen des Gegenstandes vom Anschlussträger vermieden.

Der vorliegenden Erfindung liegt die Aufgabe zugrunde, ein Befestigungssystem für die Befestigung von wenigstens einem länglichen Gegenstand an einem Bauteil zu schaffen, mit dem der Montageaufwand und die Handhabung während dem Befestigen des wenigstens einen länglichen Gegenstandes an dem Bauteil wesentlich vereinfacht werden kann und das bevorzugt eine mehrmalige Verwendung zulässt.

Diese Aufgabe der Erfindung wird durch die Merkmale des Anspruches 1 gelöst. Die Vorteile sind, dass der Benutzer während der Befestigung eines länglichen Gegenstandes oder eines Bündels bestehend aus mehreren länglichen Gegenständen an einem Anschlussträger, mit der einen Hand den Gegenstand oder das Bündel festhalten und mit der zweiten Hand den eigentlichen Spannvorgang vornehmen kann. Somit kann im Gegensatz zu den aus dem Stand der Technik bekannten Befestigungssystemen der durch die Anordnung von zusätzlichen provisorischen Haltemitteln während der Befestigung des Gegenstandes oder Bündels erforderliche Mehraufwand entfallen und ist die Befestigung des Gegenstandes oder Bündels durch nur einen Benutzer, also ohne Fremdhilfe möglich. Mit dem erfindungsgemäßen Befestigungssystem ist also eine Einhandbedienung beim Festbinden eines länglichen Gegenstandes oder eines Bündels am Anschlussträger möglich. Darüber hinaus kann durch die erfindungsgemäße Ausbildung des Befestigungssystems während dem Spannvorgang das selbsttätige Zentrieren des Gegenstandes oder von mehreren im wesentlichen parallel zueinander verlaufenden Gegenständen gegenüber dem Anschlussträger begünstigt und ein Gegenstand oder ein Bündel selbst mit großem Durchmesser problemlos am Anschlussträger befestigt werden.

Eine vorteilhafte Ausbildung des Spannbandes ist im Anspruch 2 beschrieben, mit dem der Spannvorgang, wo das einteilige bzw. einstückige Spannband tangential um den Gegenstand oder das Bündel gelegt und das Spannband mit einer manuellen Spannkraft bzw. Zugkraft etwa in zur Längserstreckung desselben paralleler Richtung beaufschlagt wird und darauffolgend die beiden Bandabschnitte vom einteiligen Spannband über die Verriegelungselemente in formschlüssigen Eingriff oder in Haftverbindung miteinander verbracht werden, wesentlich vereinfacht wird.

Von Vorteil sind auch die Ausgestaltungen nach den Ansprüchen 3 und 4, wodurch eine Anpassung an unterschiedliche Einsatzbedingungen durch die Wahl eines entsprechenden, austauschbar am Anschlussträger befestigten Spannbandes vorgenommen werden kann. Weiters erweist sich die Ausbildung der im wesentlichen glatten Spannfläche des einteiligen Spannbandes von Vorteil, da dann, wenn auf das Spannband eine manuelle Spannkraft aufgebracht wird, der oder das gegen die Spannfläche sich anlegende Gegenstand oder Bündel an der Spannfläche entlanggleitet und der Gegenstand oder das Bündel selbsttätig während dem Spannvorgang gegenüber dem Anschlussträger zentriert ausgerichtet wird. Es kann damit das Zusammenziehen der zu bündelnden Gegenstände erleichtert und auch bei einem vergleichsweise geringen Querschnitt des Bündels eine hohe Anzahl von einzelnen Gegenständen am Anschlussträger befestigt werden.

Von Vorteil ist auch die Ausgestaltung nach Anspruch 5, da nun ein in Abhängigkeit des Durchmessers vom zu befestigenden Gegenstand oder Bündel abgestimmtes und kostengünstig hergestelltes Spannband verwendet werden kann. Dabei können die Verriegelungselemente vom ersten und zweiten Bandabschnitt unmittelbar aneinander angrenzen oder in Längserstreckung des Spannbandes in einem Abstand voneinander angeordnet sein.

Nach Anspruch 6 ist von Vorteil, dass im wesentlichen nur in Abhängigkeit von der Länge des Spannbandes ein Gegenstand oder Bündel beliebigen Durchmessers am Anschlussträger befestigt werden kann, wobei die Bandabschnitte über die Verriegelungselemente in jeder ihrer Relativlagen zueinander formschlüssig oder haftend in Eingriff miteinander verbracht werden können und dadurch ein universeller Einsatz des Befestigungssystems möglich ist.

Weiters ist von Vorteil, dass auch bei niedriger Überlappungslänge zwischen den beiden Bandabschnitten eine ausreichende Haltekraft zwischen den miteinander in Eingriff befindlichen Bandabschnitten vorherrscht.

Wird das erfindungsgemäße Befestigungssystem für überhängend angeordnete Gegenstände verwendet, so erweist sich die Fortbildung nach Anspruch 7 von Vorteil, da unabhängig von der senkrecht wirkenden Gewichtskraft des wenigstens einen Gegenstandes eine zuverlässige Lagefixierung der beiden Bandabschnitt zueinander bereitgestellt und ein selbsttätiges Lösen der Formschlussverbindung zwischen den beiden Bandabschnitten vermieden wird. Weiters ist von Vorteil, dass in Folge der Umschlingung des Spannbandes am Umlenkmittel die durch die Vorspannung auf den Gegenstand oder das Bündel oder die Gewichtskraft hervorgerufene Zugkraft im zweiten Bandabschnitt um die von der Umschlingung abhängige Reibkraft vermindert wird, sodass die Rastzähne der Verriegelungselemente am ersten und zweiten Bandabschnitt nur einer niedrigen Belastung ausgesetzt werden. Vorteilhaft ist weiters, dass die Formschlussverbindung zwischen den beiden Bandabschnitten einfach gelöst werden kann, um beispielsweise einen weiteren Gegenstand am Anschlussträger festzubinden, wobei der zweite Bandabschnitt gegenüber dem ersten Bandabschnitt in zur Breitseitenfläche paralleler Richtung entlang der Längserstreckung der Rastzähne verschoben wird und die Verriegelungselemente des ersten und zweiten Bandabschnittes außer Eingriff gebracht werden.

Nach den anderen Ausführungsvarianten des Befestigungssystems, gemäß den Ansprüchen 8 bis 10, ist es vorgesehen, als Spannband ein textiles Klettband oder Klebeband einzusetzen, dass sich in der Praxis bereits bestens bewährt hat und nahezu eine beliebige Anzahl von Öffnungs- und Schließvorgängen der miteinander in Haftverbindung bringbaren Bandabschnitte vom Spannband zulässt. Dabei können die Bandabschnitte vom Spannband in jeder Relativlage der Verriegelungselemente zueinander, miteinander in im wesentlichen flächigen Eingriff verbracht bzw. eingekuppelt werden. Somit ist eine stufenlose Verstellung und Arretierung einer eingestellten Relativlage zwischen den beiden Bandabschnitten möglich. Die Verwendung eines textilen Spannbandes hat den Vorteil, dass dieses eine geringe Elastizität in Längsrichtung aufweist, sodass bei einer gegebenenfalls eintretenden Ausdehnung der Schläuche in radialer Richtung, beispielsweise im Betriebszustand der Maschinenanlage, wenn die Pneumatik- und/oder Hydraulikschläuche mit Betriebsdruck beaufschlagt werden oder bei Wärmedehnung der Gegenstände, gleichermaßen eine elastische Verlängerung des textilen Spannbandes erreicht wird und dadurch ein Einschnüren an den Befestigungsstellen der Schläuche vermieden wird. Weiters ist von Vorteil, dass zur Herstellung einer Haftverbindung zwischen den beiden Bandabschnitten vom Spannband, die beiden Bandabschnitte aneinander gedrückt bzw. mit einer manuellen Andrückkraft in senkrechter Richtung auf die Bandebene gegeneinander angepresst werden, sodass die sich überlappenden und miteinander in im wesentlichen flächigen Eingriff befindlichen Bandabschnitte das Spannband gewissermaßen versteifen und dadurch eine zuverlässige Anlage der Spannfläche vom Spannband an den oder die Gegenstände erreicht wird. Auch ist von Vorteil, dass bei einer Relativbewegung des oder der Gegenstände(s) in radialer Richtung desselben oder derselben die Bandabschnitte in senkrechter Richtung auf deren Breitseitenfläche gegeneinander angepresst werden und dadurch selbsttätig die Haltekraft zwischen den beiden miteinander in Eingriff befindlichen Bandabschnitten in Abhängigkeit von der Zugbelastung auf den zweiten Bandabschnitt erhöht wird. Bei der Verwendung des Klebebandes, kann dessen durch die Verriegelungselemente gebildete Klebeschicht beispielsweise durch einen aushärtbaren Kleber gebildet sein, sodass nach dem gegenseitigen Eingriff des ersten und zweiten Bandabschnittes der Kleber aushärtet und die beiden Bandabschnitte untrennbar miteinander verbunden sind.

Durch die zusätzliche Anordnung eines bevorzugt identisch zum Umlenkmittel ausgebildeten Befestigungsmittels für das Spannband am Anschlussträger, wie im Anspruch 11 beschrieben, wird eine Möglichkeit zur einfachen Befestigung des mit dem Anschlussträger zu befestigenden freien Endes des Spannbandes erreicht und ist durch den symmetrischen Aufbau von Umlenk- und Befestigungsmittel die individuelle Anpassung an die jeweiligen Benutzerbedürfnisse möglich. So kann das Befestigungssystem für einen Links- oder Rechtshänder ausgebildet werden.

Eine vorteilhafte Ausbildung des Anschlussträgers ist im Anspruch 12 beschrieben.

Die Ausgestaltungen nach den Ansprüchen 13 und 14 ermöglichen selbst bei der Montage des Anschlussträgers in jeder beliebigen Raumlage an einem Bauteil, ein einfaches Einfädeln des freien Endes vom Spannband in die Ausnehmung. Somit bleibt der Vorteil der einfachen Handhabung, insbesondere während dem Spannvorgang, auch bei solchen Anwendungen erhalten.

Von Vorteil sind auch die Ausgestaltungen nach den Ansprüchen 15 und 16, da selbst dann, wenn der einzelne Gegenstand oder das Bündel einen großen Durchmesser aufweist, ein Einfädeln des freien Endes vom einteiligen Spannband in die Ausnehmung und das Umlegen des Spannbandes in tangentialer Richtung um das Umlenkmittel ohne Behinderung durch den Gegenstand oder die Gegenstände möglich ist und ein Klemmen des Spannbandes zwischen dem Gegenstand oder den Gegenständen und dem Umlenkmittel während dem Spannvorgang verhindert wird.

Gemäß Anspruch 17 wird eine zur Führung der Gegenstände oder des Bündels an der Grundplatte zusätzliche Führung an wenigstens einem Kragarm bereitgestellt, wodurch dem Benutzer das Festhalten eines Gegenstandes oder das Bündeln einer Vielzahl von Gegenständen am Anschlussträger leichter fällt, weil er die Möglichkeit hat, den Gegenstand oder die Gegenstände an wenigstens einem Kragarm solange positioniert abzustützen, bis die beiden Bandabschnitte vom einteiligen Spannband miteinander in Haftverbindung oder in Formschlussverbindung sind.

Als Vorteilhaft erweisen sich auch die Ausgestaltungen nach den Ansprüchen 18 und 19, da durch die Führung des Spannbandes in Richtung zur Längserstreckung des Umlenk- und/oder Befestigungsmittels ein ungewolltes Abstreifen des Spannbandes vom Umlenk- und/oder Befestigungsmittel, dann, wenn beispielsweise eine Relativverlagerung des einzelnen Gegenstandes oder des Bündels von Gegenständen gegenüber dem ortsfesten Anschlussträger eintritt, verhindert wird. Darüber hinaus wird über die Führungsanordnung auch während dem manuellen Spannvorgang durch den Benutzer das Spannband in seiner Position festgelegt bzw. geführt, wodurch der Spannvorgang zuverlässig durchgeführt werden kann.

Von Vorteil sind auch die Ausbildungen nach den Ansprüchen 20 bis 22, da mit dem erfindungsgemäßen Befestigungssystem nunmehr ein einzelner Gegenstand oder ein Bündel von Gegenständen mit einer großen Streuung des Durchmessers am Anschlussträger lösbar festgebunden werden kann, wozu das Umlenk- und/oder Befestigungsmittel während dem Spannvorgang auf den Gegenstand oder das Bündel hinzubewegt und gegen die Mantelfläche des Gegenstandes oder Bündels angelegt sowie der Gegenstand oder das Bündel mit einer vom Spannband auf den Gegenstand oder das Bündel ausgeübten Vorspannkraft gegen das Umlenk- und/oder Befestigungsmittel und die Grundplatte angepresst wird, derart, dass eine Relativbewegung des festgebundenen Gegenstandes oder des Bündels gegenüber dem Anschlussträger vermieden wird. Damit wird eine durch Scheuern hervorgerufene Beschädigung am Gegenstand, wie beispielsweise an einer Isolierschicht eines Elektrokabels oder an einem Pneumatik- oder Hydraulikschlauch, über die gesamte Einsatzdauer desselben vermieden.

Nach den Weiterbildungen gemäß den Ansprüchen 23 und 24 ist es vorgesehen, dass der Anschlussträger über eine Halterung lösbar mit einem Bauteil verbindbar ist. Dabei erweist sich vor allem die Ausführung nach Ansprüchen 24 von Vorteil, da der Anschlussträger über die Schnapp- bzw. Rastvorrichtung beispielsweise an einer Längsnut eines langgestreckten Tragprofiles einer Maschinenanlage verdrehgesichert eingerastet und der Anschlussträger entlang der Führungsnut beliebig verschoben werden kann, sodass nunmehr aber auch ein Abstand zwischen zumindest zwei unmittelbar hintereinander an der Längsnut angeordneten Anschlussträgern beliebig eingestellt werden kann. So wird die Möglichkeit eröffnet, beispielsweise an einer Stirnseite der Längsnut vorsorglich mehrere Befestigungssysteme zu positionieren und dann, wenn eine bereits bestehende Maschinenanlage beispielsweise um eine weitere Arbeitsstation etc. erweitert wird, die erforderliche Anzahl von diesen vorsorglichen Befestigungssystemen entlang der Führungsnut an eine entsprechende Stelle, an der die Leitungen verlegt werden sollen, verschoben und danach die Leitungen am Anschlussträger festgebunden werden. Andererseits können aber auch die an der entsprechenden Stelle positionierten Befestigungssysteme weiters verwendet werden, indem nämlich die beiden miteinander in haftenden oder formschlüssigen Eingriff befindlichen Bandabschnitte vom Spannband auseinander gezogen bzw. voneinander getrennt werden, das Spannband vom Umlenkmittel entfernt und in Richtung zum Befestigungsmittel bzw. in Richtung des am Anschlussträger befestigten Endes des Spannbandes bewegt, die weiteren Leitungen zum Gegenstand oder Bündel hinzugelegt und darauffolgend das Spannband tangential um das um die weiteren Leitungen vergrößerte Bündel herum gelegt und am Umlenkmittel gefaltet, wonach die beiden Bandabschnitte des Spannbandes wieder in Haft- oder Formschlussverbindung miteinander verbracht werden.

Die Ausgestaltungen nach den Ansprüchen 25 und 26 sind von Vorteil, da im Gegensatz zu einem zug- und/oder druckfesten Spannband durch die Elastizität des Spannbandes in Längsrichtung des Spannbandes und/oder senkrecht auf die Bandebene, mit gleicher Spannkraft eine vergleichsweise höhere Vorspannkraft auf den oder die Gegenstände ausgeübt werden kann, sodass das Befestigungssystem auch für die Befestigung von geneigt oder vertikal angeordneten Gegenständen, insbesondere Leitungen, geeignet ist. Außerdem wird bei vertikaler Verlegung von Gegenständen über größere Entfernungen eine Zugentlastung der positionsfest an den Anschlussträgern befestigten Gegenständen, insbesondere Leitungen, erreicht.

Gemäß Anspruch 27 ist das Spannband in Richtung seiner Längserstreckung mit unterschiedlichen Biegesteifigkeiten aufweisenden Abschnittsbereichen ausgebildet, wodurch nun die Möglichkeit geschaffen wird, dass bereits vor der Montage des Anschlussträgers am Bauteil und/oder Montage des wenigstens einen Gegenstandes oder Bündels von mehreren Gegenständen am Anschlussträger, die beiden Bandabschnitte unter Bildung einer ösenartigen Schlaufe lösbar miteinander verbunden sind. Nach der Montage des Anschlussträgers am Bauteil wird der wenigstens eine Gegenstand oder das Bündel von mehreren Gegenständen durch diese Schlaufe gefädelt. Ist der Durchmesser des Gegenstandes oder des Bündels größer als der Durchmesser der Schlaufe, kann der erste und/oder zweite Bandabschnitt durch Zugwirkung in senkrechter Richtung auf die Bandebene elastisch gedehnt und der Gegenstand oder das Bündel einfach durch die Schlaufe gefädelt werden. Sofern der Durchmesser des Gegenstandes oder Bündels kleiner als der Durchmesser der Schlaufe ist, können die beiden miteinander in Formschluss- oder Haftverbindung stehenden Bandabschnitte voneinander getrennt werden, worauf das freie Ende vom Spannband mit der Zugkraft beaufschlagt wird, der erste Bandabschnitt an den Gegenstand oder das Bündel angelegt und darauffolgend die beiden Bandabschnitte wieder in Eingriff miteinander verbracht werden. Aus diesem Grund ist ein Trennen der Verbindung der beiden Bandabschnitte nur noch dann notwendig, wenn der Durchmesser des Gegenstandes oder Bündels kleiner als der Durchmesser der Schlaufe ist, sodass der Zeitaufwand beispielsweise für die Verlegungsarbeiten von Gegenständen, insbesondere Leitungen, an einer Maschinenanlage reduziert werden kann. Durch die gezielte Beeinflussung der Elastizität in den Abschnittsbereichen kann selbst bei niedriger Spannkraft eine ausreichend hohe Vorspannkraft vom Spannband auf den Gegenstand oder das Bündel ausgeübt werden und wird dadurch eine sichere Lagefixierung des Gegenstandes oder Bündels gegenüber dem Anschlussträger erreicht.

Eine besondere einfache Handhabung während dem Befestigen des Gegenstandes oder Bündels, wird durch die Ausgestaltung nach Anspruch 28 erreicht, da das am Anschlussträger befestigte Spannband etwa S-förmig vorgeformt, jedoch elastisch biegsam ausgebildet ist.

Die Erfindung wird im nachfolgenden anhand der in den Zeichnungen dargestellten Ausführungsbeispiele näher erläutert.

### Es zeigen:

- Fig. 1: eine Maschinenanlage mit mehreren in Vorschubrichtung eines Werkstückträgers hintereinander angeordneten Arbeitsstationen und mit einer Vielzahl von an einem Tragprofil eines Grundgestelles der Maschinenanlage angeordneten erfindungsgemäßen Befestigungssystemen, in Seitenansicht und in stark vereinfachter schematischer Darstellung;
- Fig. 2: eine erste Ausführungsvariante des erfindungsgemäßen Befestigungssystems mit einem Anschlussträger und einem Teilabschnitt eines Spannbandes, und einen Bauteilabschnitt, in perspektivischer Ansicht und in stark vereinfachter schematischer Darstellung;
- Fig. 3: das Befestigungssystem nach Fig. 2 mit dem Anschlussträger und einer Anzahl von zu einem Strang gebündelten Leitungen, in Draufsicht;
- Fig. 4: eine weitere Ausführungsvariante des erfindungsgemäßen Befestigungssystems und einen mit diesem lösbar befestigten länglichen Gegenstandes, in perspektivischer, vereinfachter Darstellung;
- Fig. 5: eine andere Ausführungsvariante des Anschlussträgers für das erfindungsgemäße Befestigungssystem, in perspektivischer Ansicht;
- Fig. 6: einen Teilabschnitt einer weiteren Ausführungsvariante des Anschlussträgers für das erfindungsgemäße Befestigungssystem mit einem verstellbaren Umlenkmittel, teilweise geschnitten und in stark vereinfachter schematischer Darstellung;
- Fig. 7a: einen Teilabschnitt des erfindungsgemäßen Befestigungssystems mit einer anderen Ausführungsvariante des Anschlussträgers mit dem in eine Ausnehmung eingefädelten Spannband und das sich in einer Ruhestellung befindliche Umlenkmittel, in Draufsicht und in stark vereinfachter schematischer Darstellung;
- Fig. 7b: der Anschlussträger nach Fig. 7a mit dem Spannband mit den sich in einer Verschlussstellung befindlichen Bandabschnitten und das in eine Arbeitsstellung ausgelenkte Umlenkmittel;
- Fig. 8: einen Teilabschnitt der Maschinenanlage und das Befestigungssystem, geschnitten gemäß den Linien VIII - VIII in Fig. 1, in schematischer Darstellung;
- Fig. 9: einen Teilabschnitt des Spannbandes in einer ersten Ausführungsvariante, in stark vergrößerter und schematischer Darstellung;
- Fig. 10: eine weitere Ausführungsvariante des erfindungsgemäßen Befestigungssystems mit einer anderen Ausgestaltung des Spannbandes, in perspektivischer, vereinfachter Darstellung;
- Fig. 11: das an einem Bauteil befestigte erfindungsgemäße Befestigungssystem in einer anderen Ausführungsvariante mit einer weiteren Ausgestaltung des Anschlussträgers, in Stirnansicht geschnitten und in vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

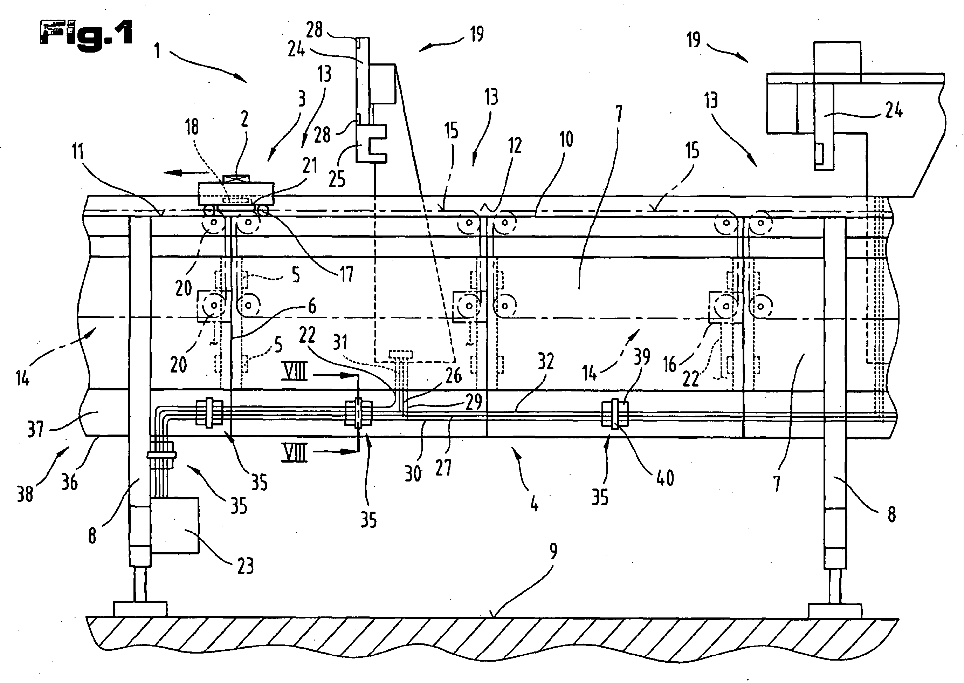

In Fig. 1 ist eine Maschinenanlage 1 zur Bearbeitung und/oder zur Montage von Bauteilen 2 gezeigt. Die Bauteile 2 sind auf einem Werkstückträger 3 angeordnet. Zur Halterung der Bauteile 2 auf dem Werkstückträger 3 ist dieser mit einer Aufnahme versehen. Die Maschinenanlage 1 weist mehrere zu einer selbsttragenden Gehäuseeinheit 4 über Führungs- und/oder über Kupplungsvorrichtungen 5 an einander zugewandten Stirnplatten 6 miteinander verbundene Gehäuseteile 7 auf. Die Gehäuseteile 7 sind zu der selbsttragenden Gehäuseeinheit 4 verbunden und über Aufstellfüße 8 auf einer Aufstandsfläche 9 abgestützt. In Längsrichtung der Gehäuseteile 7 und über eine gesamte Länge der Gehäuseeinheit 4 sind auf einer Oberseite 10 zumindest jeweils eine durchgehende Höhenführungsbahn 11 und zumindest eine davon getrennte Seitenführungsbahn 12 für den Werkstückträger 3 angeordnet. In Richtung der Längserstreckung der Gehäuseeinheit 4 bzw. in Vorschubrichtung des Werkstückträgers 3 - gemäß eingetragenen Pfeil - sind mehrere hintereinander angeordnete Fahrbahnabschnitte 13 ausgebildet, von welchem jeden zumindest eine eigene von den benachbarten Fahrbahnabschnitten 13 unabhängige Vorschubvorrichtung 14 mit einem bandartigen Transportmittel 15 und einem Vorschubantrieb 16 zugeordnet ist. Die Vorschubvorrichtung 14 ist getrennt von der Höhen- und Seitenführungsbahn 11, 12 und zwischen diesen angeordnet. Der Werkstückträger 3 ist mit Höhen- und Seitenführungsorganen 17, 18 auf der Höhen- und Seitenführungsbahn 11, 12 bevorzugt im wesentlichen spielfrei geführt und über die Vorschubvorrichtung 14 entlang der Höhen- und Seitenführungsbahn 11, 12 zwischen mehreren in Längsrichtung der Gehäuseeinheit 4 angeordneten Arbeitsstationen 19 horizontal verfahrbar ausgebildet.

Das bandartige Transportmittel 15 der Vorschubvorrichtung 14 ist in einer bevorzugten Ausführungsvariante durch ein endlos umlaufendes Zugmittel, beispielsweise ein Zahnriemen, gebildet, das sich parallel zur Höhenführungsbahn 11 erstreckt und über mehrere in Vorschubrichtung - gemäß eingetragenen Pfeil - voneinander distanzierte Umlenkrollen 20 der Seite und Höhe nach geführt und mit dem Vorschubantrieb 16, insbesondere einem elektrischen oder pneumatischen oder hydraulischen Antriebsmotor, gekuppelt ist.

Der Werkstückträger 3 ist mit dem Transportmittel 15 antriebsverbunden bzw. gekoppelt und weist zu den Mitnahmeorganen am Transportmittel 15, gemäß dieser Ausführungsvariante Eingriffszähne, auf einer der Oberseite 10 zugewandten Unterseite 21 komplementär ausgebildete Mitnahmeorgane, gemäß dieser Ausführungsvariante eine Zahnleiste, auf, wobei die Mitnahmeorgane des Transportmittels 15 und des Werkstückträgers 3 während der Vorschubbewegung - gemäß eingetragenen Pfeil - formschlüssig in Eingriff stehen und den Werkstückträger 3 zwischen den Fahrbahnabschnitten 13 zu den jeweiligen Arbeitsstationen 19 positioniert fortbewegen.

Der mit dem Transportmittel 15 gekoppelte Antriebsmotor ist beispielsweise durch einen Schrittschalt- oder Servomotor gebildet und ist jeder der den einzelnen Fahrbahnabschnitten 13 zugeordneten Antriebsmotoren über eine Steuerleitung 22 mit einer Steuereinheit 23 verbunden.

Die Arbeitsstationen 19 sind für unterschiedlichste Manipulations-, Füge- und Bearbeitungsvorgänge ausgelegt und können beispielsweise durch eine Fertigungseinrichtung, insbesondere ein Automatikmodul für Fügen, Schweißen, Löten etc., oder durch einen Handarbeitsplatz, oder eine Entnahmevorrichtung gebildet werden. Die Arbeitsstationen 19 weisen für die an sie gestellten Aufgaben beispielsweise über einen fluidischen Antrieb betätigbare Handhabungseinheiten 24 mit schematisch dargestellten Greifern 25 auf. Die pneumatisch oder hydraulisch angesteuerte Handhabungseinheit 24 ist über zumindest eine Steuerleitung 26, insbesondere Fluidleitung, gegebenenfalls unter Zwischenschaltung eines nicht weiters dargestellten Mehrwegeventils, insbesondere Pneumatikventil oder Hydraulikventil, mit einer zu einer in der Steuereinheit 23 angeordneten Versorgungsquelle führenden Versorgungsleitung 27, insbesondere Fluidleitung, verbunden.

Die aus dem Stand der Technik bekannten Handhabungseinheiten 24 weisen beispielsweise für die Endlagendämpfüng schematisch dargestellte Sensoren 28 auf, die über eine weitere Steuerleitung 29 mit einer Datenübertragungsleitung 30, insbesondere einer Busleitung, verbunden ist. Diese Datenübertragungsleitung 30 ist wiederum mit einer in der Steuereinheit 23 angeordneten, nicht weiters dargestellten Rechnereinheit, beispielsweise SPS oder Computer, verbunden.

Die elektrischen Baugruppen der Arbeitsstationen 19 sind ebenfalls über eine weitere Steuerleitung 31 an einer Stromversorgungsleitung 32 angeschlossen, die wiederum mit einem elektrischen Leistungsteil, wie Schütz, Relais etc., in der Steuereinheit 23 verbunden sind.

Wie nun schon aus dem stark vereinfachten Beispiel der Maschinenanlage 1 ersichtlich wird, sind eine Vielzahl von mechanische und/oder elektrische und/oder Daten übertragende Leitungen 22, 27, 30, 32 für die Ansteuerung bzw. den Datenaustausch zwischen den Arbeitsstationen 19 und der zentralen Steuereinheit 23 der Maschinenanlage 1 erforderlich, die zu einem gebündelten Strang zusammengefasst werden müssen, wie dies in der Fig. 1 ersichtlich ist.

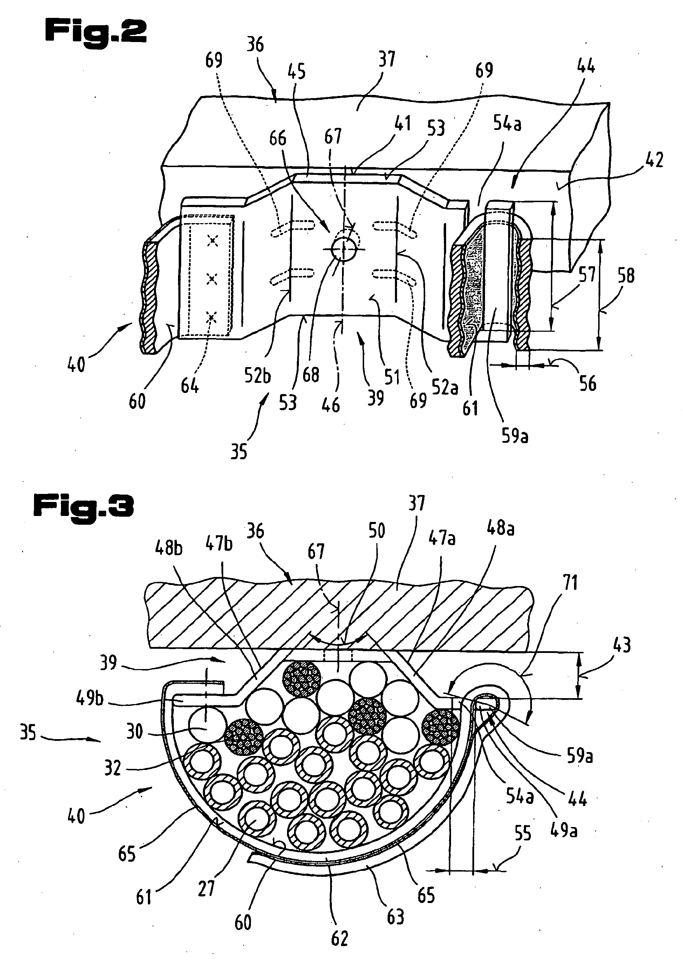

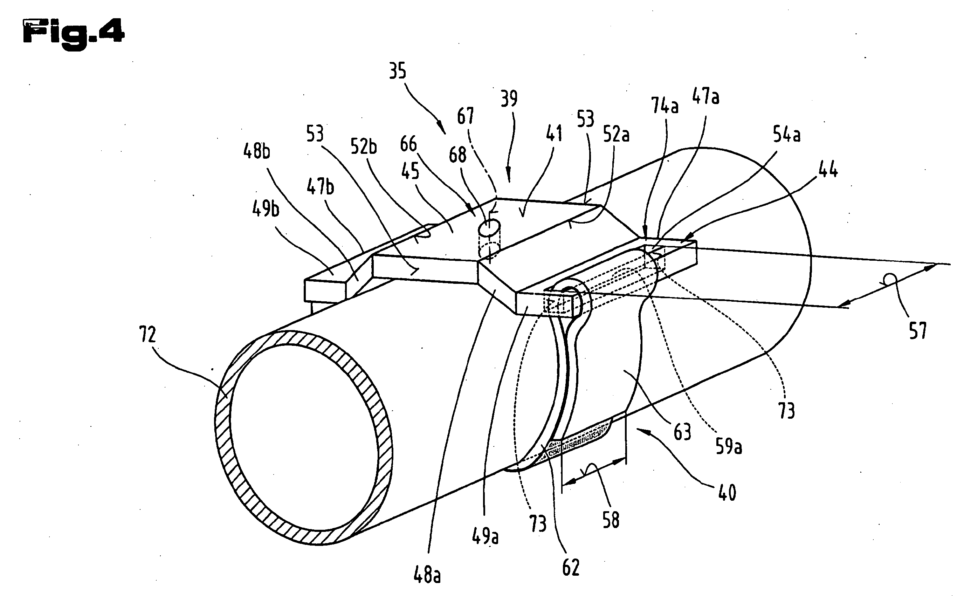

Gemäß der Erfindung wird ein mehrteiliges Befestigungssystem 35 für die Bündelung und/oder Befestigung von mehreren, im wesentlichen parallel verlaufenden strangartigen Gegenständen, insbesondere Leitungen, wie Steuer- und/oder Datenübertragung- und/oder Versorgungsleitungen 22, 26, 29, 31, 30, 27, 32, wie dies beispielsweise in Zusammenschau aus den Fig. 1 und 3 ersichtlich ist, oder zur Befestigung von nur einem strangartigen Gegenstand, wie dies beispielsweise in der Fig. 4 für eine andere Anwendung dargestellt ist, vorgeschlagen.

Wie ebenfalls in der Fig. 1 schematisch dargestellt, sind mit einem Bauteil 36, insbesondere einem Tragprofil 37 eines Grundgestelles 38 der Gehäuseeinheit 4, mehrere in Längserstreckung des Bauteiles 36 voneinander im Abstand angeordnete Befestigungssysteme 35 lösbar verbunden.

Eine erste Ausführungsvariante des mehrteiligen Befestigungssystems 35, wie dieses beispielsweise bei der in der Fig. 1 dargestellten Maschinenanlage 1 verwendet werden kann, ist in den gemeinsam beschriebenen Fig. 2 und 3 in unterschiedlichen Ansichten und vereinfacht dargestellt, gezeigt. In Fig. 2 sind aus Gründen der besseren Übersicht die strangartigen Gegenständen, insbesondere Leitungen, wie Steuer- und/oder Datenübertragung- und/oder Versorgungsleitungen 22, 26, 29, 31, 30, 27, 32, nicht dargestellt. Das mehrteilige Befestigungssystem 35 weist einen an dem Bauteil 36 befestigbaren Anschlussträger 39 und zumindest ein das Bündel von länglichen Gegenständen bzw. den Leitungsstrang tangential und teilweise umschlingendes einteiliges Spannband 40 auf, wobei sich das Befestigungssystem 35, insbesondere der Anschlussträger 39, nur über einen Teil einer Länge des länglichen Gegenstandes erstreckt. Die Gegenstände können biegesteif oder biegeweich bzw. flexibel ausgebildet sein.

Der Anschlussträger 39 bildet eine ebenflächige Anlagefläche 41 aus, die im Montagezustand des Befestigungssystems 35 an einer vom Bauteil 36 ausgebildeten Montagefläche 42 bevorzugt unmittelbar aufliegt. Der Anschlussträger 39 weist wenigstens ein in einer zur Anlagefläche 41 in einem vertikalen Abstand 43 versetzt verlaufenden Ebene und quer zur Längserstreckung des Spannbandes 40, insbesondere in einer zur Längserstreckung des Spannbandes 40 senkrechten Ebene, angeordnetes profilartiges bzw. bolzenartiges Umlenkmittel 44 auf.

Der Anschlussträger 39 weist eine etwa quaderförmige Grundplatte 45 und in Bezug auf eine zur Anlagefläche 41 senkrecht und zum Umlenkmittel 44 parallel verlaufende Mittelebene 46 spiegelbildlich zueinander angeordnete und voneinander abgewandte Seitenteile 47a, 47b auf. Die Seitenteile 47a, 47b sind mit der Grundplatte 45 verbunden und ist jeder Seitenteil 47a, 47b durch geneigt zueinander verlaufende Profilschenkel 48a, 49a, 48b, 49b gebildet, wobei die im Abstand 43 zur Anlagefläche 41 angeordneten Profilschenkel 49a, 49b parallel zur Anlagefläche 41 verlaufen und sind die an die plattenförmige Grundplatte 45 anschließenden Profilschenkel 48a, 48b in zur Anlagefläche 41 senkrechter Richtung geneigt zueinander angeordnet und erweitern sich mit zunehmenden Abstand von der Anlagefläche 41 bis auf die parallel zur Anlagefläche 41 angeordneten Profilschenkel 49a, 49b. Die Mittelebene 46 bildet die Winkelhalbierende des von den Profilschenkeln 48a, 48b eingeschlossenen Winkels 50.

Die plattenförmige Grundplatte 45 bildet die Anlagefläche 41 und eine zur Anlagefläche 41 bevorzugt parallel verlaufende, abgewandte Stützfläche 51 und zwischen der Anlage- und Stützfläche 41, 51 sich im wesentlichen parallel zueinander erstreckende Querseitenflächen 52a, 52b und sich im wesentlichen parallel zueinander erstreckende Längsseitenflächen 53 aus. Die Stützfläche 51 kann, wie nicht dargestellt, auch konkav gerundet sein oder aus einer ersten und zweiten Teilstützfläche, die nebeneinander liegen und zueinander abgeschrägt sind, zusammengesetzt sein, derart, dass die Ebenen der beiden Teilstützflächen einen Anlagewinkel einschließen. Der oder die am Anschlussträger 39 zu befestigenden Gegenstände liegen an der Stützfläche 51 oder den Teilstützflächen auf.

Der erste Seitenteil 47a ist im Bereich der ersten Querseitenfläche 52a und der zweite Seitenteil 47b im Bereich der zweiten Querseitenfläche 52b mit dem Anschlussträger 39, insbesondere der Grundplatte 45, verbunden. Wie aus den Figuren weiters ersichtlich, ist der erste Seitenteil 47a des Anschlussträgers 39 mit einer vom Spannband 40, insbesondere einem Haftband, durchsetzbaren ersten Ausnehmung 54a versehen und grenzt diese erste Ausnehmung 54a an das Umlenkmittel 44 an. Diese erste Ausnehmung 54a ist zwischen den im Abstand voneinander und im wesentlichen parallel zueinander verlaufenden Längsseitenflächen 53 angeordnet und einseitig geöffnet und bildet einen Aufnahmeschlitz aus. Eine Breite 55 der Ausnehmung 54a entspricht einem Mehrfachen einer Dicke 56 des Spannbandes 40. Eine Länge 57 der Ausnehmung 54a entspricht annähernd einer Bandbreite 58 des Spannbandes 40. Die Breite 55 entspricht etwa dem 1,5-fachen bis 5-fachen, insbesondere 2-fachen bis 3,5-fachen, beispielsweise das 2,5-fache, der Dicke 56 des Spannbandes 40.

Das Umlenkmittel 44 ist durch einen profilartigen bzw. bolzenartigen Steg 59a mit einer Längserstreckung gebildet und weist in einer zu seiner Längserstreckung senkrechten Ebene einen etwa elliptischen Querschnitt auf. Im Rahmen der Erfindung ist es aber auch möglich, dass der Querschnitt des Steges 59a kreisförmig oder etwa mehreckig ausgebildet ist.

Das in den Figuren schematisch angedeutete einteilige Spannband 40 ist biegeschlaff bzw. etwa in senkrechter Richtung auf die Bandebene biegsam ausgebildet und weist eine das zu umschlingende Bündel von länglichen Gegenständen zugewandte, im wesentlichen glatte Spannfläche 60 und eine dieser gegenüberliegende und etwa parallel verlaufende Breitseitenfläche 61 auf und ist mit einem ersten Ende über ein durch Kreuze schematisch angedeutetes Verbindungselement 64, insbesondere Schrauben, Nieten, mit dem Anschlussträger 39, insbesondere dem Seitenteil 47b, bevorzugt lösbar verbunden. Andererseits kann das Spannband 40 mit dem Anschlussträger 39 auch über eine Klebenaht, Schweißnaht unlösbar verbunden werden.

Das Spannband 40 ist gemäß dieser Ausführung durch ein textiles Klettband gebildet und besteht aus zwei Bandabschnitten 62, 63, wobei die beiden Bandabschnitte 62, 63 jeweils über ihre gesamte Länge die Spannfläche 60 und die dieser gegenüberliegende Breitseitenfläche 61 ausbilden. Die Breitseitenfläche 61 des ersten und zweiten Bandabschnittes 62, 63 vom einteiligen Spannband 40 ist jeweils mit einem Verriegelungselement versehen, das bevorzugt jeweils durch ein Haftmittel 65 gebildet ist. Wie nicht näher dargestellt, kann das Haftmittel 65 im ersten Bandabschnitt 62 durch eine Hakenbahn und das Haftmittel 65 im zweiten Bandabschnitt 63 durch eine Schlaufenbahn oder umgekehrt gebildet sein. Die Haftmittel 65 sind also als Klettverschluss ausgebildet. Werden die beiden Bandabschnitten 62, 63 aneinander gelegt bzw. kontaktiert, haften die beiden Verriegelungselemente aneinander, da sich die Haken- und Schlaufenbahn ineinander verhaken. Diese Ausführung ist vor allem für jene Anwendungen geeignet, bei denen der bzw. das zu befestigende Gegenstand bzw. Bündel einen Standarddurchmesser ausbildet.

Wie bereits oben beschrieben, erstrecken sich die Haftmittel 65 einseitig an der Breitseitenfläche 61 bevorzugt jeweils über die gesamte Länge der beiden Bandabschnitte 62, 63. Möglich ist aber auch eine Ausführung, bei der sich die Verriegelungselemente bzw. Haftmittel 65 einseitig an der Breitseitenfläche 61 jeweils nur über einen Teil der Länge des Bandabschnittes 62, 63 erstrecken. Der vom befestigten ersten Ende des Spannbandes 40 bis zum Umlenkmittel 44 reichende erste Bandabschnitt 62 und der um das Umlenkmittel 44 geführte zweite Bandabschnitt 63 sind über die Haftmittel 65 in senkrechter Richtung auf die Bandebene miteinander in Eingriff bringbar, wobei die beiden Bandabschnitte 62, 63 in ihrer aneinander gelegten Verschlussstellung lösbar miteinander verbunden sind bzw. bei Kontakt aneinander haften.

Zur lösbaren Befestigung des Anschlussträgers 39 am Bauteil 36, insbesondere dem Tragprofil 37, ist der Anschlussträger 39 mit zumindest einer Halterung 66 versehen und gemäß dieser Ausführung, durch eine mit senkrecht zur Anlagefläche 41 ausgerichteter Längsachse 67 verlaufende Durchgangsbohrung 68 und eine nicht weiters dargestellte Schraubenanordnung gebildet, die die Durchgangsbohrung 68 in zur Anlagefläche 41 senkrechter Richtung durchsetzt.

Der Anschlussträger 39 kann einstückig aus Kunststoff im Spritzgussverfahren oder durch Stanzen und Biegen aus einem im wesentlichen ebenflächigen, metallischen Grundmaterial in hohen Stückzahlen zu niedrigen Herstellkosten hergestellt werden. Durch die abgewinkelten Profilschenkel 48a bis 49b der Seitenteile 47a, 47b kann selbst bei geringen Wandstärken des Anschlussträgers 39 eine ausreichende Steifigkeit des Anschlussträgers 39 erreicht werden. Soll der Anschlussträger 39 mit niedrigsten Wandstärken, beispielsweise 1,0 mm bis 2,0 mm, konstruiert werden, kann zur Erhöhung der Steifigkeit jeweils zwischen dem ersten Seitenteil 47a und der Grundplatte 45 und dem zweiten Seitenteil 47b und der Grundplatte 45 wenigstens eine, bevorzugt zwei in einem Abstand voneinander angeordnete und in zur Mittelebene 46 in etwa senkrechter Richtung verlaufende Sicken 69 - wie in strichlierten Linien in der Fig. 2 eingetragen - angeordnet werden.

Das Spannband 40 umschlingt das Umlenkmittel 44, insbesondere den Steg 59a, bzw. wird am Umlenkmittel 44 an seiner Umfangsfläche angelegt und um dieses tangential umgelenkt, wobei ein Umschlingungswinkel 71 zwischen 90° und 240°, insbesondere 130° und 220°, beispielsweise 200°, beträgt.

In der Fig. 4 ist eine weitere Ausführungsvariante des erfindungsgemäßen mehrteiligen Befestigungssystems 35 zum Festbinden eines länglichen Gegenstandes, insbesondere der Versorgungsleitung, beispielsweise einer Wasserrohrleitung 72, mit einem am nicht weiters dargestellten Bauteil 36, beispielsweise einem Mauerwerk, befestigbaren Anschlussträger 39 mit einer Anlagefläche 41 und dem den länglichen Gegenstand tangential und teilweise umschlingenden einteiligen Spannband 40, gezeigt. Der Anschlussträger 39 umfasst, wie bereits oben beschrieben, die bevorzugt rechteckförmige Grundplatte 45 und die im Abstand voneinander angeordneten jeweils an die Querseitenflächen 52a, 52b anschließenden Seitenteile 47a, 47b mit den Profilschenkeln 48a bis 49b. Im ersten Seitenteil 47a ist zwischen den Längsseitenflächen 53 des Anschlussträgers 39 die etwa parallel zur nicht weiters eingetragenen Mittelebene 46 verlaufende Ausnehmung 54a angeordnet. Diese Ausnehmung 54a grenzt an das in einer zur Anlagefläche 41 parallel und im senkrechten Abstand 43 zur Anlagefläche 41 verlaufenden Ebene angeordnete Umlenkmittel 44 an. Die Ausnehmung 54a ist im vorliegenden Ausführungsbeispiel durch eine fensterartige Durchstecköffnung für das diese durchsetzende Spannband 40 ausgebildet und ist die Länge 57 der Durchstecköffnung durch die zumindest um die Bandbreite 58 voneinander distanzierten Stirnflächen 73 begrenzt. Die Länge 57 entspricht annähernd der Bandbreite 58.

Die Ausnehmung 54a bildet mit ihren einander zugewandten Stirnflächen 73 eine Führungsanordnung 74a aus und kann über diese ein Ausfädeln des Spannbandes 40 aus der Ausnehmung 54a in Längsrichtung derselben verhindert werden. Das Umlenkmittel 44 ist durch den parallel zur Mittelebene 46 bzw. Winkelhalbierenden und parallel zur Anlagefläche 41 verlaufenden profilartigen Steg 59a gebildet, der eine Länge aufweist, die zumindest geringfügig größer bemessen ist, als die Bandbreite 58 bzw. annähernd der Bandbreite 58 entspricht.

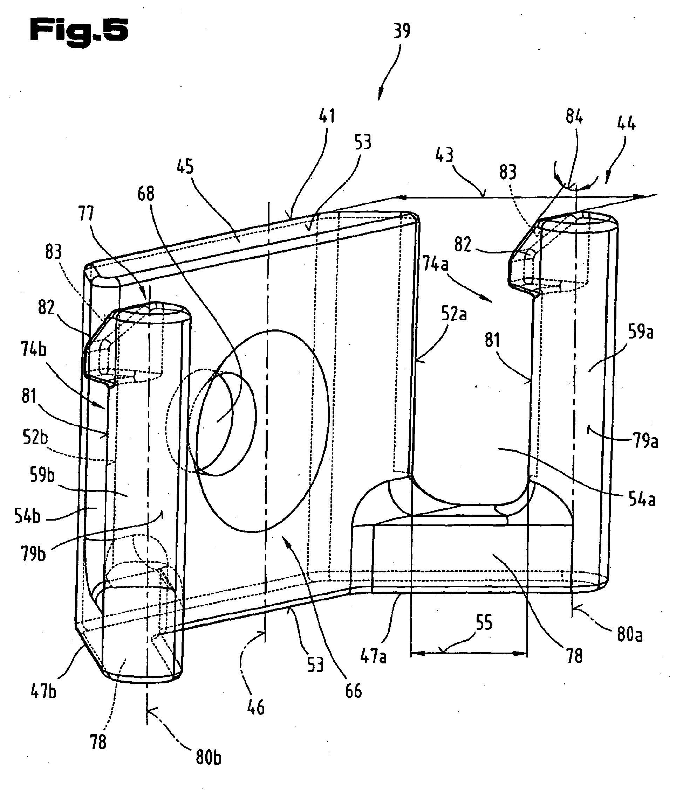

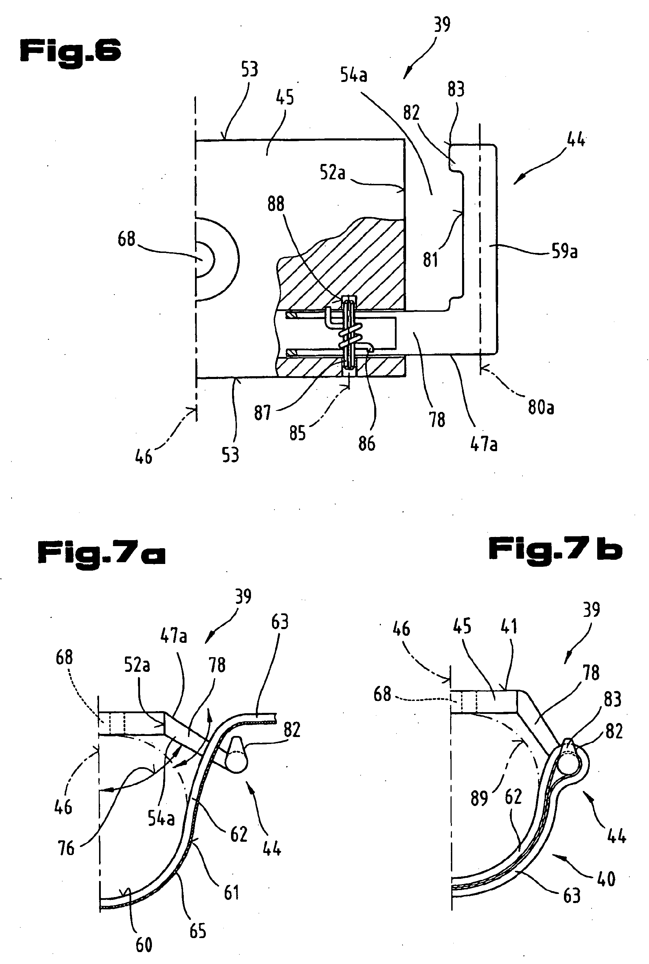

In der Fig. 5 ist eine weitere, bevorzugte Ausführungsvariante des Anschlussträgers 39 für das erfindungsgemäße mehrteilige Befestigungssystems 35 zum Festbinden von wenigstens einem, nicht weiters dargestellten länglichen Gegenstand oder einem, nicht weiters dargestellten Bündel von mehreren länglichen Gegenständen in perspektivischer Ansicht gezeigt. Der Anschlussträger 39 weist die plattenförmige Grundplatte 45 und im Bereich der ersten Querseitenfläche 52a das in einer zur Anlagefläche 41 parallel verlaufenden Ebene und quer zur Längsrichtung des um den Gegenstand oder das Bündel tangential herum gelegten, nicht weiters dargestellten Spannbandes 40, insbesondere Haftbandes, angeordnete Umlenkmittel 44 und im Bereich der zweiten Querseitenfläche 52b ein in einer zur Anlagefläche 41 parallel verlaufenden Ebene und quer zur Längsrichtung des um den Gegenstand oder das Bündel tangential herum gelegten, nicht weiters dargestellten Spannbandes 40 angeordnete Befestigungsmittel 77 auf, wobei die Ebenen fluchtend zueinander verlaufen. Das Umlenkmittel 44 und Befestigungsmittel 77 sind in Bezug auf die zur Anlagefläche 41 senkrecht und zum Umlenkmittel 44 parallel verlaufenden Mittelebene 46 spiegelbildlich zueinander angeordnet. Das Umlenkmittel 44 ist in einer zur Anlagefläche 41 winkelig verlaufenden Ebene angeordnet und/oder in zur Anlagefläche 41 vertikaler Richtung in einem Abstand 43 versetzt angeordnet und mit dem einen über die Anlagefläche 41 vorragenden und mit der Grundplatte 45 im Bereich der ersten Querseitenfläche 52a verbundenen Kragarm 78 bildenden Seitenteil 47a verbunden und am freien Ende des Kragarmes 78 angeordnet. Das Befestigungsmittel 77 ist mit dem einen über die Anlagefläche 41 vorragenden und mit der Grundplatte 45 im Bereich der zweiten Querseitenfläche 52b verbundenen Kragarm 78 bildenden Seitenteil 47b verbunden und am freien Ende des Kragarmes 78 angeordnet. Die beiden Kragarme 78 verlaufen geneigt zueinander und divergieren ausgehend von der Anlagefläche 41 in Richtung jeweils eines freien Endes im Winkel 76, siehe Fig. 7a, zur Mittelebene 46.

Das Umlenk- und Befestigungsmittel 44, 77 sind in zur Anlagefläche 41 vertikaler Richtung in einem Abstand 43 versetzt angeordnet, der einem Mehrfachen der Bandbreite 58 vom Spannband 40 entspricht.

Diese Kragarme 78 sind geneigt zueinander angeordnet und erweitern sich mit zunehmenden Abstand von der Anlagefläche 41 in Richtung jeweils ihrer freien Enden und schließen die Mittelebene 46 und jeweils eine den durch den Kragarm 78 gebildeten Seitenteil 47a, 47b aufnehmende Ebene einen in der Fig. 7a eingetragenen Winkel 76 ein, der zwischen 30° und 70°, insbesondere 40° und 60°, beispielsweise 45° beträgt. Die Mittelebene 46 bildet die Winkelhalbierende des von den beiden Seitenteilen 47a, 47b bzw. den Kragarmen 78 eingeschlossenen Winkels.

Wie aus der Fig. 5 weiters entnehmbar, ist zwischen dem Umlenkmittel 44 und der Grundplatte 45 und zwischen dem Befestigungsmittel 77 und der Grundplatte 45 im ersten und zweiten Seitenteil 47a, 47b jeweils eine einseitig geöffnete, erste und zweite Ausnehmung 54a, 54b in Form eines Aufnahmeschlitzes angeordnet. Die Ausnehmungen 54a, 54b weisen jeweils eine Breite 55 auf, die kleiner als der Abstand 43 ausgebildet ist. Der mit dem Spannband 40 zu bündelnde und/oder zu befestigenden Durchmesser des einzelnen oder mehrerer Gegenstände ist annähernd gleich oder zumindest geringfügig größer bemessen als der vertikale Abstand 43 zwischen der Anlagefläche 41 und dem Umlenk- und Befestigungsmittel 44, 77.

Die erste Ausnehmung 54a grenzt an das Umlenkmittel 44 und an die erste Querseitenfläche 52a der Grundplatte 45 an und ist die Länge 57 der Ausnehmung 54a durch die Längsseitenfläche 53 und den Kragarm 78 begrenzt. Die zweite Ausnehmung 54b grenzt an das Befestigungsmittel 77 und an die zweite Querseitenfläche 52b der Grundplatte 45 an und ist die Länge 57 der Ausnehmung 54b durch die Längsseitenfläche 53 und den Kragarm 78 begrenzt.

Das Umlenk- und/oder Befestigungsmittel 44, 77 ist in einer bevorzugten Ausführungsform mit einer Führungsanordnung 74a, 74b für das jeweils das Umlenk- und Befestigungsmittel 44, 77 umschlingende Spannband 40 versehen, mittels der das Spannband 40 in Richtung der Längserstreckung des Umlenk- und/oder Befestigungsmittels 44, 77 im Montagezustand positioniert gehalten wird. Ebenso ist während dem Aufbringen einer Spannkraft bzw. Zugkraft auf das freie Ende und in paralleler Richtung zur Längserstreckung des Spannbandes 40, am Umlenkmittel 44 an eine Umfangsfläche 79a gelegte Spannband 40 in Richtung der Längserstreckung des Umlenkmittels 44 geführt, wodurch der Spannvorgang erleichtert wird. Die Umfangsflächen 79a, 79b des Umlenk- und/oder Befestigungsmittels 44, 77 sind im wesentlichen glatt ausgebildet. Ferner kann durch die Führungsanordnung 74a, 74b ein Abstreifen des Spannbandes 40 vom Umlenk- und Befestigungsmittel 44, 77, auch dann, wenn eine geringfügige Relativverlagerung des oder der Gegenstände gegenüber dem Anschlussträger 39 eintritt, vermieden werden. Die Führungsanordnung 74b des Befestigungsmittels 77 ist identisch zur Führungsanordnung 74a des Umlenkmittels 44 und als nutartige Vertiefung ausgebildet.

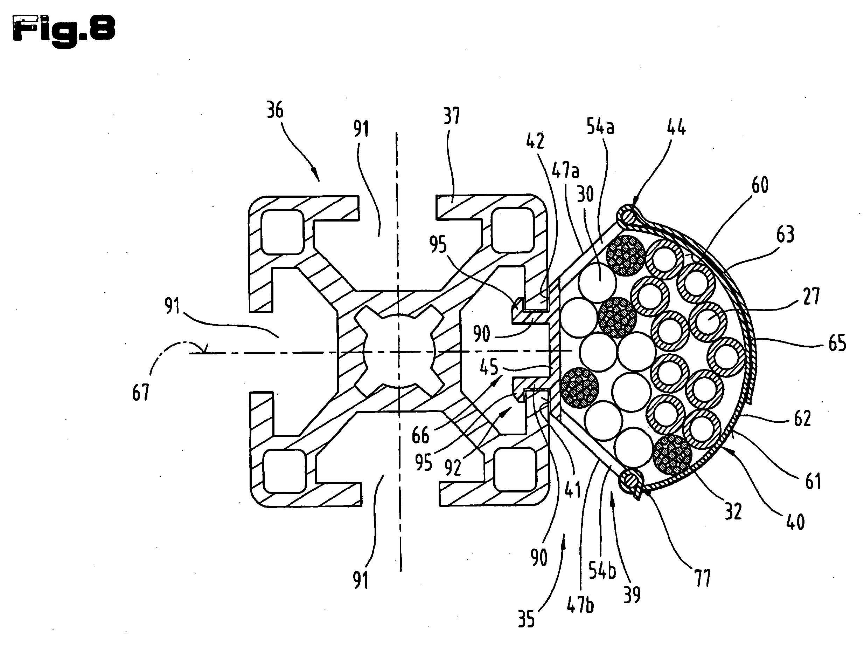

Das mit dem Anschlussträger 39, insbesondere dem Befestigungsmittel 77, verbundene freie Ende des einteiligen Spannbandes 40 - wie in der Fig. 8 eingetragen - umschlingt schlaufenartig das Befestigungsmittel 77 und ist die Spannfläche 60 vom Spannband 40 an einer Umfangsfläche 79b, insbesondere eine etwa zylindrische Mantelfläche, angelegt, wodurch das biegeschlaff bzw. flexibel ausgebildete Spannband 40 über sein befestigtes Ende um eine in Richtung der Längserstreckung des Befestigungsmittels 77 verlaufende Achse 80b schwenkbar gelagert bzw. mit dem Befestigungsmittel 77 scharnierartig verbunden ist. Wie bereits oben kurz erwähnt, ist das Umlenk- und/oder Befestigungsmittel 44, 77 als bolzenartiger Steg 59a, 59b ausgebildet und ist die Führungsanordnung 74a, 74b durch eine zumindest über einen Teilabschnitt in der Umfangsfläche 79a, 79b des Stege 59a, 59b vertieft angeordnete Führungsnut 81 gebildet. Soll das an die Umfangsfläche 79a, 79b angelegte Spannband 40 in der Führungsnut 81 vollständig vertieft angeordnet sein, erweist es sich von Vorteil, wenn die Führungsnut 81 über die gesamte Umfangsfläche 79a, 79b radial umlaufend ausgebildet ist, wie dies jedoch nicht weiters dargestellt ist.

Das bolzenartige Umlenk- und/oder Befestigungsmittel 44, 77 ist jeweils am freien Endbereich desselben mit einem Vorsprung 82 mit einer in zur Ausnehmung 54a, 54b bzw. zur Anlagefläche 41 geneigt verlaufenden Abweiserfläche 83 für das in die Ausnehmung 54a, 54b einzufädelnde Spannband 40 versehen. Die Abweiserfläche 83 und Längsachse 80a, 80b des Umlenk- und/oder Befestigungsmittels 44, 77 schließen einen Winkel 84 ein, der kleiner 90°, beispielsweise 45°, beträgt. Durch diese Abweiserfläche 83 wird das Einfädeln des Spannbandes 40 in Richtung der Längserstreckung des Umlenkmittels 44 in die Ausnehmung 54a erheblich erleichtert, da während dem Einfädeln des Spannbandes 40 ein Anstoßen an einer scharfen Kante am freien Endbereich des Umlenkmittels 44 vermieden wird. Die Längsachse 80a, 80b des Umlenk- und/oder Befestigungsmittels 44, 77 ist entlang der Schnittlinie von zwei sich schneidenden Ebenen ausgebildet, wobei die erste Ebene im Abstand parallel zur Anlagefläche 41 und die zweite Ebene im Abstand parallel zur Mittelebene 46 verlaufen.

Um die oben beschriebene Scharnierwirkung weiter zu verbessern, besteht die Möglichkeit, das am Anschlussträger 31, insbesondere am Befestigungsmittel 77, anzuordnende freie Ende des Spannbandes 40 unter Bildung einer Schlaufe mit dem ersten Bandabschnitt 62 durch partielle Erhitzung zu verbinden, insbesondere zu verschweißen.

Wie in der Fig. 5 weiters eingetragen, ist der Anschlussträger 39, insbesondere die Grundplatte 45, mit der Halterung 66, gemäß dieser Ausführung eine Durchgangsbohrung 68, versehen.

Die in dieser Fig. dargestellte Ausführung kann sowohl für einen Rechts- als auch Linkshänder ausgelegt werden. Gemäß der Fig. ist das Befestigungssystem 35 für einen Rechtshänder ausgebildet, während; dann, wenn das Umlenk- und Befestigungsmittel 44, 77 gegeneinander vertauscht werden, das Befestigungssystem 35 für einen Linkshänder ausgebildet ist.

In der Fig. 6 ist ein Teilbereich einer weiteren Ausführungsvariante des Anschlussträgers 39 für das erfindungsgemäße mehrteilige Befestigungssystem 35 zum Festbindung von wenigstens einem, nicht weiters dargestellten länglichen Gegenstand oder mehreren länglichen Gegenständen zu einem Bündel, in Ansicht und teilweise geschnitten, gezeigt. Diese Ausführungsvariante eignet sich vornehmlich für eine große Streuungsbreite eines Durchmessers des mit dem nicht dargestellten Spannband 40 zu befestigenden einzelnen Gegenstandes oder Bündels. Dazu ist das Umlenk- und/oder Befestigungsmittel 44, 77 in Richtung der Mittelebene 46 relativ zu der Grundplatte 45 und bevorzugt entgegen der Wirkung einer Federkraft verstellbar ausgebildet. Der den Kragarm 78 bildende Seitenteil 47a und/oder 47b mit dem Umlenk- und/oder Befestigungsmittel 44, 77 ist am Anschlussträger 39, insbesondere der Grundplatte 45, verschwenkbeweglich gelagert und verläuft eine Schwenkachse 85 senkrecht zur Längsseitenfläche 53. Die Federkraft wird durch wenigstens ein Rückstellelement 86, insbesondere eine vorgespannte Drehfeder, ausgeübt, das zwischen dem den Kragarm 78 aufweisenden Umlenk- und/oder Befestigungsmittel 44, 77 und der Grundplatte 45 angeordnet ist. Das Umlenk- und/oder Befestigungsmittel 44, 77 ist über den Kragarm 78 an einem Achszapfen 87, insbesondere ein in einer Bohrung 88 eingepresster Zylinderstift oder Spannstift bzw. Spannbuchse, drehbar gelagert. Das Umlenk- und/oder Befestigungsmittel 44, 77 ist aus einer Ruhestellung in eine Arbeitsstellung verstellbar ausgebildet, wobei das Umlenk- und/oder Befestigungsmittel 44, 77 innerhalb eines durch die Ruhe- und Arbeitsstellung begrenzten Verstellweges zwischen 0° in der Ruhestellung und maximal 135° in der Arbeitsstellung beliebig eingestellt werden kann. In der Ruhestellung verläuft die Grundplatte 45 fluchtend zum Umlenk- und/oder Befestigungsmittel 44, 77.

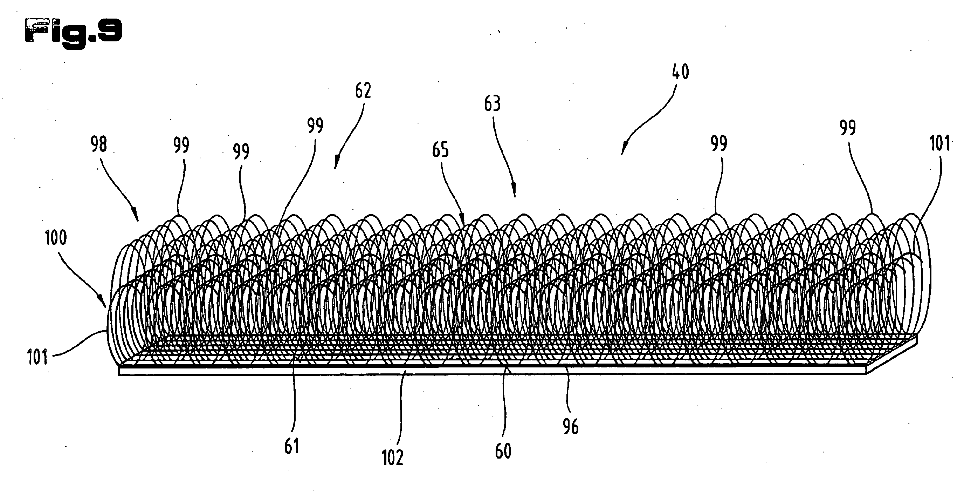

Die Federkraft wirkt beim Spannvorgang der auf das Spannband 40 am freien Ende aufgebrachten Spannkraft entgegen und ist die Spannkraft größer als die Federkraft. Soll ein einzelner Gegenstand oder mehrere Gegenstände im Befestigungssystem 35 befestigt und/oder gebündelt werden, wird der erste Bandabschnitt 62 vom Spannband 40 tangential um den Gegenstand oder das Bündel herum geführt und am Umlenkmittel 44 an die Umfangsfläche 79a mit einer der Spannfläche 60 gegenüberliegenden Breitseite angelegt, worauf der weitere Bandabschnitt 63 in Richtung auf den ersten Bandabschnitt 62 zubewegt und am freien Ende des Spannbandes 40 mit einer manuellen Mindestspannkraft bzw. mit der Hand angezogen wird, sodass das in der Ruhestellung befindliche Umlenk- und/oder Befestigungsmittel 44, 77 entgegen der Wirkung der Federkraft in Richtung auf den einzelnen Gegenstand oder das Bündel zubewegt und gegebenenfalls an diesen bzw. dieses angelegt wird, und anschließend unter Beibehaltung der Mindestspannkraft die Verriegelungselemente bzw. das Haftmittel 65 - wie beispielsweise in Fig. 9 gezeigt - der einander gegenüberliegenden Bandabschnitte 62, 63 in senkrechter Richtung auf die Breitseitenfläche 61 in Eingriff verbracht bzw. aneinander gepresst werden und die beiden Bandabschnitte 62, 63 in der Verschlussstellung zumindest in einem Teilbereich über das Haftmittel 65 haftend und lösbar miteinander verbunden sind. Der weitere Bandabschnitt 63 wird am Umlenkmittel 44 gegenüber dem ersten Bandabschnitt 62 um etwa 180° umgelenkt.

In den gemeinsam beschriebenen Fig. 7a und 7b ist ein Teilbereich des erfindungsgemäßen mehrteiligen Befestigungssystems 35 mit einer weiteren Ausführungsvariante des Anschlussträgers 39 zum Festbinden von wenigstens einem, nicht weiters dargestellten länglichen Gegenstand oder mehreren länglichen Gegenständen zu einem Bündel in Ansicht und stark vereinfacht gezeigt. Der Anschlussträger 39 weist die etwa rechteckförmige Grundplatte 45 und das Umlenkmittel 44 sowie das in diesen Fig. nicht dargestellte Befestigungsmittel 77 auf. Das Umlenkmittel 44 und Befestigungsmittel 77 sind in Bezug auf die zur Anlagefläche 41 senkrecht und zum Umlenkmittel 44 parallel verlaufenden Mittelebene 46 spiegelbildlich zueinander angeordnet und ist das Umlenkmittel 44 über den von der Anlagefläche 41 frei vorkragenden ersten Kragarm 78 im Bereich der Querseitenfläche 52a mit der Grundplatte 45 und das Befestigungsmittel 77 über den, zum ersten Kragarm 78 spiegelbildlich in Bezug auf die Mittelebene 46 angeordneten weiteren Kragarm 78 im Bereich der zweiten Querseitenfläche 52b mit der Grundplatte 45 verbunden, wobei die Ausnehmung 54a an die Querseitenfläche 52a und das Umlenkmittel 44 und die zweite Ausnehmung 54b an die zweite Querseitenfläche 52b und an das Befestigungsmittel 77 angrenzt.

Die beiden Kragarme 78 sind in zur Anlagefläche 41 senkrechter Richtung geneigt zueinander verlaufend angeordnet und verlaufen ausgehend von der Anlagefläche 41 in Richtung jeweils seines freien Endes, mit dem das Umlenk- und Befestigungsmittel 44, 77 verbunden ist, aufweitend zueinander bzw. divergieren jeweils im Winkel 76 von beispielsweise 45° zur Mittelebene 46.

Der erste Kragarm 78 ist mit dem Umlenkmittel 44 und/oder der zweite Kragarm 78 mit dem Befestigungsmittel 77 jeweils quer zu seiner Längserstreckung in Richtung der Mittelebene 46 zwischen einer in der Fig. 7a dargestellten Ruhestellung und einer in der Fig. 7b dargestellten Arbeitsstellung biegeelastisch verformbar und in eine geradlinige Stellung, wie diese in der Fig. 7a gezeigt ist, selbsttätig rückstellbar oder plastisch verformbar ausgebildet. Der Kragarm 78 bildet einen Biegearm aus, der, um die statischen Belastungen, insbesondere Biegebeanspruchung, auf diesen niedrig zu halten, in Richtung zum freien Ende verjüngt ist und eine geringere Stärke aufweist. Soll ein einzelner länglicher Gegenstand oder mehrere parallel zueinander verlaufende Gegenstände gebündelt am Befestigungssystem 35 festgebunden werden, wird mit einer ersten Hand eines nicht weiters dargestellten Benutzers der oder die Gegenstände gehalten und mit der zweiten Hand das Spannband 40 am freien Ende ergriffen und der mit dem Befestigungsmittel 77 verbundene, vom ersten Ende bis zum Umlenkmittel 44 reichende erste Bandabschnitt 62 tangential um den einzelnen Gegenstand oder das Bündel herum geführt und am Umlenkmittel 44 an einem Teilabschnitt der Umfangsfläche 79a angelegt, worauf an einem freien Ende am Spannband 40 mit einer Mindestspannkraft angezogen und der weitere Bandabschnitt 63 unter Beibehaltung der Mindestspannkraft um das Umlenkmittel 44 in Gegenrichtung zum ersten Bandabschnitt 62 auf den ersten Bandabschnitt 62 zubewegt wird, sodass das in der Ruhestellung befindliche Umlenk- und/oder Befestigungsmittel 44, 77 entgegen der Wirkung der im Kragarm 78 innewohnende Federkraft in Richtung auf den einzelnen Gegenstand oder das Bündel zubewegt und das Umlenk- und/oder Befestigungsmittel 44, 77 gegebenenfalls mit dem um dieses geschlungene Spannband 40 gegen die Mantelfläche 89 des Gegenstandes oder Bündels, wie in strichpunktierte Linien eingetragen, angelegt wird und anschließend unter Beibehaltung der Mindestspannkraft die Verriegelungselemente bzw. das Haftmittel 65 - wie beispielsweise in Fig. 9 gezeigt **-** der einander gegenüberliegenden Bandabschnitte 62, 63 in senkrechter Richtung auf die Bandebene miteinander in Eingriff verbracht bzw. aneinander gepresst werden und die beiden Bandabschnitte 62, 63 zumindest in einem Teilbereich über die Haftmittel 65 haftend miteinander verbunden werden.

Werden die beiden Bandabschnitte 62, 63 voneinander getrennt bzw. auseinandergezogen, federt der aus der Ruhestellung in die Arbeitsstellung ausgelenkte Kragarm 78 des Umlenkmittels 44 und/oder der Kragarm 78 des Befestigungsmittels 77 selbsttätig in die Ruhestellung zurück, da die innewohnende Federkraft die Mindestspannkraft übersteigt.

In der Fig. 8 ist der Bauteil 36, insbesondere das Tragprofil 37, der in der Fig. 1 dargestellten Maschinenanlage 1 und das am Bauteil 36 lösbar befestigte mehrteilige Befestigungssystem 35 in Schnittdarstellung gezeigt. Der Aufbau und die Wirkungsweise des Befestigungssystems 35 wurde bereits in den vorhergehenden Fig. 1 bis 7b ausführlich beschrieben und können auf die Fig. 8 sinngemäß übertragen werden. In dieser Fig. wird vorwiegend eine andere Ausführungsvariante der Halterung 66 erläutert. Das Tragprofil 37 ist durch ein aus dem Stand der Technik bekanntes Strangpressprofil aus Leichtmetall, wie Aluminium, gebildet und weist an jeder seiner vier Seitenwände je eine in Richtung zur Außenfläche des Tragprofiles 37 hin offene, eine Hinterschneidung aufweisende und zur bereichsweisen Aufnahme der mit Rastarmen 90 versehenen Halterung 66 dienende Längsnut 91 auf.

Die Halterung 66 ist durch eine mit dem Anschlussträger 39, insbesondere der Grundplatte 45, verbundene Schnapp- bzw. Rastvorrichtung 92 gebildet, die zumindest zwei an der Anlagefläche 41 im wesentlichen senkrecht vorragende und etwa parallel zueinander in einem Abstand verlaufende Rastarme 90 aufweist. Die Rastarme 90 weisen an ihren freien Enden quer zur Längserstreckung derselben seitlich vorragende, den Bauteil 36 in einem Teilbereich formschlüssig hintergreifende Rastnasen 95 auf. Im gezeigten Ausführungsbeispiel sind die Rastarme 90 jeweils am freien Ende mit den die voneinander abgewandten Seitenflächen der Rastarme 90 überragenden sowie die Längsnut 91 formschlüssig hintergreifenden Rastnasen 95 versehen. Die beiden Rastnasen 95 sind in Bezug auf die senkrecht zur Anlagefläche 41 ausgerichtete Längsachse 67 der Halterung 66 spiegelbildlich zueinander angeordnet. Die Rastarme 90 sind in einer zu ihrer Längserstreckung senkrechten Achse elastisch verstellbar und selbsttätig rückstellbar ausgebildet. Die mit der Grundplatte 45 an der Anlagefläche 41 verbundenen Rastarme 90 sind in einer bevorzugten Ausführung einstückig am Anschlussträger 39 angeformt und ist der Anschlussträger 39 aus Kunststoff, beispielsweise im Spritzgussverfahren, hergestellt. Der Anschlussträger 39 ist am Bauteil 36 verdrehgesichert und lösbar befestigt.

In der Fig. 9 ist ein Teilabschnitt des am erfindungsgemäßen Befestigungssystem 35 bevorzugt verwendeten einteiligen Spannbandes 40 in perspektivischer Ansicht, stark vergrößert und vereinfacht dargestellt. Das einteilige Spannband 40 bildet den Bandabschnitt 62 und Bandabschnitt 63 aus und ist durch ein textiles Klettband gebildet und weist die sich über die gesamte Länge der Bandabschnitte 62, 63 erstreckende, im wesentlichen glatte erste Spannfläche 60 und die dieser gegenüberliegende Breitseitenfläche 61 auf. Die beiden Bandabschnitte 62, 63 vom Spannband 40 sind jeweils mit einem Verriegelungselement versehen. Die Verriegelungselemente sind gleichartig ausgebildet und durch ein einziges gleichartiges Haftmittel 65 gebildet. In einer bevorzugten Ausführung sind die Verriegelungselemente durch ein über die gesamte Länge des Spannbandes 40 an der Breitseitenfläche 61 bzw. der Spannfläche 60 gegenüberliegenden Breitseite der beiden Bandabschnitte 62, 63 ununterbrochen durchlaufendes Haftmittel 65 gebildet. Andererseits kann jedes Verriegelungselement am ersten und zweiten Bandabschnitt 62, 63 auch durch ein jeweils nur über einen Teil der Länge des ersten und/oder zweiten Bandabschnittes 62, 63 angeordnetes gleichartiges Haftmittel 65 gebildet sein, wobei dann die gleichartig ausgebildeten Verriegelungselemente vom ersten und zweiten Bandabschnitt 62, 63 bevorzugt unmittelbar aneinander angrenzen.

Das Spannband 40 weist einen Tragkörper 96 mit der Spannfläche 60 und der dieser gegenüberliegenden im wesentlichen ebenen Breitseitenfläche 61 und das oder die am Tragkörper 96 angeordneten Haftmittel 65 auf. Der Tragkörper 96 ist in den beiden Bandabschnitten 62, 63 mit einer identischen Schlaufenbahn 98 mit einer Vielzahl von über die Breitseitenfläche 61 verteilt angeordneten und diese überragenden, gleichartigen Schlaufen 99 und einer identischen Hakenbahn 100 mit einer Vielzahl von über die Breitseitenfläche 61 verteilt angeordneten und diese überragenden, gleichartigen Haken 101 versehen. Das Haftmittel 65 der beiden Bandabschnitte 62, 63 weist Verhakungselemente auf, die durch die Schlaufen 99 und Haken 101 der Schlaufen- und Hakenbahn 98, 100 gebildet sind.

Der Tragkörper 96 ist durch ein Gewebe oder Gewirke aus Kett- und Schussfäden gebildet und die von Fäden gebildeten vorstehenden Verhakungselemente bzw. die diese bildenden Schlaufen 99 und Haken 101 sind in den Tragkörper 96 eingewebt oder eingewirkt. Das Haftmittel 65 der beiden Bandabschnitte 62, 63 haftet bei Kontakt aneinander, sind aber die beiden Bandabschnitte 62, 63 zerstörungs- und rückstandsfrei voneinander lösbar. Die Schlaufen 99 und/oder Haken 101 sind durch multifile bzw. monofile Garne gebildet. Beispielsweise kann der gewebte bzw. gewirkte Tragkörper 96 aus Nylon-, Polyester- oder Polypropylengarnen gebildet sein. Die Schlaufen 99 und/oder Haken 101 können beispielsweise in Monofilgarn oder Multifilgarn aus Nylon, Polyester oder Polypropylen ausgebildet sein. Die Schlaufen 99 und Haken 101 sind geringfügig räumlich verformbar, insbesondere elastisch verstellbar und in ihre etwa aufrechte Stellung selbsttätig rückstellbar ausgebildet.

Wie aus der Fig. 9 weiters ersichtlich, weisen die Schlaufen 99 in zur Breitseitenfläche 61 senkrechter Richtung eine Höhe auf, die zumindest geringfügig größer bemessen ist, als eine parallele Höhe der Haken 101. Die Höhe der Haken 101 entspricht annähernd der Höhe der Schlaufen 99. Die Schlaufen- und Hakenbahn 98, 100 sind miteinander gewebt oder gewirkt in dem Spannband 40 und jeweils innerhalb des ersten und zweiten Bandabschnittes 62, 63 ausgebildet, daher weist jeder Bandabschnitt 62, 63 an der Breitseitenfläche 61 die Schlaufen- und Hakenbahn 98, 100 auf. Diese Art von Klettband hat den Vorteil, dass auf nur einer Breitseite vom ersten und/oder zweiten Bandabschnitt 62, 63 oder Spannband 40 das sich zumindest über einen Teil der Länge derselben bzw. desselben erstreckende Haftmittel 65 bzw. die dieses bildenden gleichartigen Schlaufen 99 und gleichartigen Haken 101 ausgebildet ist, sodass beim Aneinanderdrücken der beiden einander gegenüberliegenden Bandabschnitte 62, 63 die Schlaufen 99 und Haken 101 sich ineinander verhaken bzw. in gegenseitigem Eingriff stehen, wodurch eine hohe Haltekraft in dem Teilbereich der Haftverbindung zwischen den beiden Bandabschnitte 62, 63 ohne zusätzlicher Druckbelastung auf die Bandabschnitte 62, 63 erreicht wird. Da beide Bandabschnitte 62, 63 jeweils die Schlaufen- und Hakenbahn 98, 100 aufweisen, und nicht getrennt voneinander am ersten und zweiten Bandabschnitt 62, 63 angeordnet sind, ist weiters von Vorteil, dass in der Verschlussstellung des Spannbandes 40 die aneinander gelegten Bandabschnitte 62, 63 über die gesamte Länge deren Überlappung immer vollständig haftend miteinander eingreifen können und dadurch ein zuverlässiges Spannen des Gegenstandes oder Bündels selbst bei unterschiedlichsten Durchmessern des Gegenstandes oder Bündels möglich ist.

Dadurch, dass die Schlaufen 99 und Haken 101 geringfügig räumlich verformbar sind, kann eine geringfügige Relativverlagerung des Gegenstandes oder Bündels gegenüber dem Anschlussträger 39 zugelassen werden, ohne dass sich dabei die beiden in Haftverbindung stehenden Bandabschnitte 62, 63 voneinander lösen.

Wie in der Fig. 9 schematisch eingetragen, kann der Tragkörper 96 an der Spannfläche 60 mit einer insbesondere elastischen Beschichtung 102 aus Kunststoff, insbesondere Elastomer, beispielsweise Gummi, Styrol-Butadien-Kautschuk (SBR), Polyurethan TPE-U, versehen werden.

Wie nicht weiters dargestellt, können die sich über die gleiche Länge an der Breitseitenfläche 61 gemeinsam erstreckende Schlaufen- und Hakenbahn 98, 100 im Gegensatz zu der Ausführung, wie beispielsweise in der Fig. 8 dargestellt, bei der sich das die Schlaufen- und Hakenbahn 98, 100 aufweisende Haftmittel 65 über die gesamte Länge des Spannbandes 40 , erstreckt, auch jeweils nur über einen Teil der Länge des ersten und/oder zweiten Bandabschnittes 62, 63, beispielsweise im Bereich zwischen 30 % und 90 %, insbesondere 40 % bis 80 %, beispielsweise 60 %, in Bezug auf die Länge des Bandabschnittes 62, 63, gemeinsam erstrecken. Die Schlaufen- und Hackenbahn 98, 100 kann in einer weiteren Ausführungsform in Richtung der Längserstreckung des ersten und/oder zweiten Bandabschnittes 62, 63 an im Abstand voneinander vorgesehenen Stellen partiell angeordnet werden.

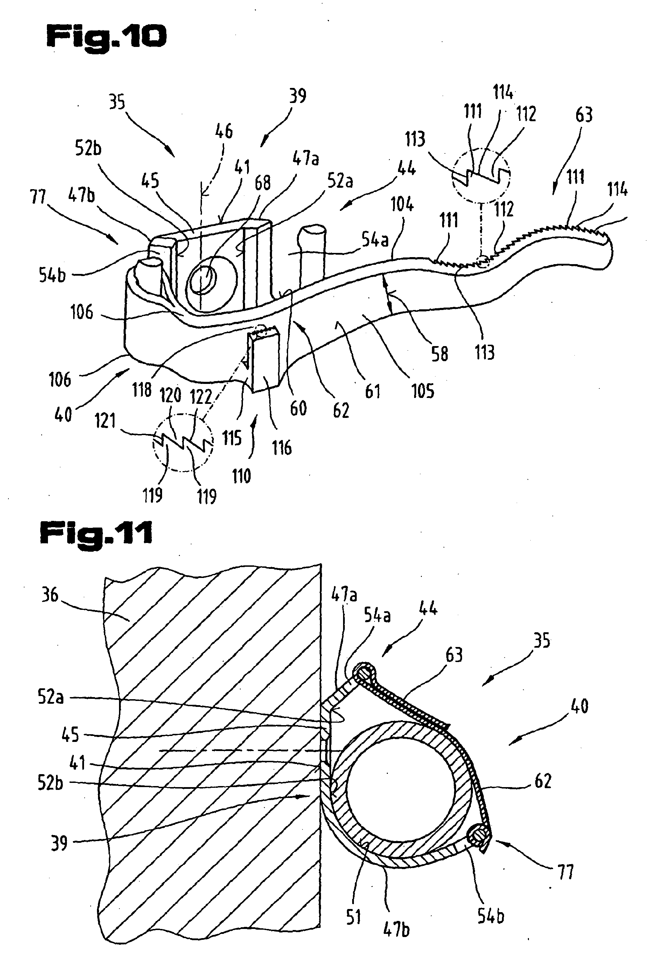

In der Fig. 10 ist eine weitere Ausführungsvariante des erfindungsgemäßen Befestigungssystems 35 perspektivischer Ansicht gezeigt. Das Befestigungssystem 35 umfasst den bereits oben in den Fig. 2 bis 8 ausführlich beschriebenen Anschlussträger 39 und eine andere Ausführungsvariante des Spannbandes 40. Das am Anschlussträger 39, insbesondere am Befestigungsmittel 77, zu befestigende Ende des Spannbandes 40 bildet eine Schlaufe aus, mittels der das Spannband 40 gelenkig mit dem Anschlussträger 39, insbesondere dem Befestigungsmittel 77, verbunden ist. Das einteilige Spannband 40 weist einen im wesentlichen recheckförmigen Querschnitt mit einer dem wenigstens einen zu befestigenden Gegenstand zugewandten ersten Breitseite 104 und einer dieser gegenüberliegenden zweiten Breitseite 105 sowie zwei Schmalseiten 106 auf und besteht aus dem ersten und zweiten Bandabschnitt 62, 63 und ist in senkrechter Richtung auf die Breitseite 104, 105 biegeelastisch ausgebildet. Der vom befestigten Ende bis zum Umlenkmittel 44 reichende erste Bandabschnitt 62 bildet die, dem in dieser Figur nicht dargestellten zumindest einen Gegenstand zugewandte Spannfläche 60 aus und ist an einer der Spannfläche 60 gegenüberliegenden zweiten Breitseite 105 zumindest ein Verriegelungskopf 110 angeordnet. Der Verriegelungskopf 110 weist das erste Verriegelungselement auf.

Der um das Umlenkmittel 44 bedarfsweise geführte zweite Bandabschnitt 63 ist auf seiner dem Verriegelungskopf 110 gegenüberliegenden ersten Breitseite 104 mit dem zweiten Verriegelungselement versehen. Dieses zweite Verriegelungselement ist bevorzugt annähernd über die gesamte Länge des zweiten Bandabschnittes 63 an der ersten Breitseite 104 ausgebildet und weist eine Vielzahl von hintereinander in einem gleichen Abstand zueinander quer zur Längserstreckung des Bandabschnittes 63 verlaufende Rastzähne 111 auf. Die Rastzähne 111 sind durch in der ersten Breitseite 104 des zweiten Bandabschnittes 63 eingeformte Vertiefungen 112 gebildet und weisen jeweils einen dreieckigen Querschnitt mit einer dem ersten Bandabschnitt 62 zugewandten steilen, bevorzugt etwa senkrecht zur Breitseite 104 verlaufenden Rastflanke 113 und einer schräg dazu in Richtung des freien Endes des Spannbandes 40 geneigten Flanke 114 auf. Der Neigungswinkel der geneigten Flanken 114 kann beliebig gewählt werden und beträgt bevorzugt gegenüber der Längsrichtung des zweiten Bandabschnittes 63 etwa zwischen 30° und 60°, beispielsweise 45°.

Der am ersten Bandabschnitt 62 einstückig angeformte Verriegelungskopf 110 umfasst einen seitlich an der zweiten Breitseite 105 bzw. Breitseitenfläche 61 vorstehenden Fortsatz 115 und eine am freien Ende des Fortsatzes 115 parallel zur Breitseitenfläche 61 verlaufende Seitenwand 116. Der Fortsatz 115, die Seitenwand 116 und ein Teilabschnitt der zweiten Breitseite 105 des ersten Bandabschnittes 62 begrenzen einen in Richtung einer der Schmalseiten 106, vorzugsweise der oberen Schmalseite 106 vom Spannband 40 einseitig geöffneten Bandkanal 118.

Die Seitenwand 116 ist der zweiten Breitseite 105 zugewandt mit dem zum zweiten Verriegelungselement am zweiten Bandabschnitt 63 komplementär ausgebildeten ersten Verriegelungselement versehen.

Dieses erste Verriegelungselement ist bevorzugt nur über einen Teil der Länge des ersten Bandabschnittes 62 an der Seitenwand 116 ausgebildet und weist eine Vielzahl von hintereinander in einem gleichen Abstand zueinander quer zur Längserstreckung des Bandabschnittes 62 verlaufende Rastzähne 119 auf. Die in Richtung zur Spannfläche 60 ausgerichteten Rastzähne 119 sind durch in der Seitenwand 116 eingeformte Vertiefungen 120 gebildet und weisen jeweils einen dreieckigen Querschnitt mit einer dem zweiten Bandabschnitt 63 abgewandten steilen, bevorzugt etwa senkrecht zur Breitseite 105 verlaufenden Rastflanke 121 und einer schräg dazu in Richtung des freien Endes des Spannbandes 40 geneigten Flanke 122 auf. Der Neigungswinkel der geneigten Flanken 122 kann beliebig gewählt werden und beträgt bevorzugt gegenüber der Längsrichtung des ersten Bandabschnittes 62 etwa zwischen 30° und 60°, beispielsweise 45°.

Die Rastzähne 111, 119 und Vertiefungen 112, 120 der Verriegelungselemente am ersten und zweiten Bandabschnitt 62, 63 sind komplementär ausgebildet und sind die Rastzähne 111, 119 im wesentlichen starr ausgebildet. Das einstückige Spannband 40 ist gemäß dieser Ausführung durch einen biegeelastischen Kunststoff, insbesondere Polymer oder thermoplastischen Kunststoff, beispielsweise Polyurethan, Polypropylen, Polyvinylchlorid, Polyamid, Gummi etc., gebildet und kann beispielsweise im Mehrkomponenten-Spritzgussverfahren hergestellt werden.

Beim Hindurchziehen des freien Endes des Spannbandes 40 greifen die Rastzähne 111 vom zweiten Bandabschnitt 63 formschlüssig in die Vertiefungen 120 des ersten Verriegelungselementes am ersten Bandabschnitt 62 ein. Während dem Hindurchziehen des zweiten Bandabschnittes 63 durch den Verriegelungskopf 110, wird der an den Verriegelungskopf 110 angrenzende Bereich vom ersten Bandabschnitt 62 in senkrechter Richtung auf die Breitseite 104, 105 des ersten Bandabschnittes 62 elastisch federnd ausgelenkt. Durch das formschlüssige Ineinandergreifen der Verriegelungselemente vom ersten und zweiten Bandabschnitt 62, 63 kann sichergestellt werden, dass beim Einschieben des zweiten Bandabschnittes 63 in den Verriegelungskopf 110 die Rastzähne 111 des zweiten Verriegelungselementes entlang der Flanken 122 des ersten Verriegelungselementes hochgleiten und an den Rastflanken 121 in entgegengesetzter Richtung dazu eine Arretierung erfolgt.

Soll die Formschlussverbindung zwischen den beiden Bandabschnitten 62, 63 wieder gelöst werden, um beispielsweise einen weiteren Gegenstand am Anschlussträger 39 festzubinden, wird der zweite Bandabschnitt 63 gegenüber dem ersten Bandabschnitt 62 in zur Breitseitenfläche 61 paralleler Richtung entlang der Längserstreckung der Rastzähne 111, 119 nach oben verschoben, und die Verriegelungselemente des ersten und zweiten Bandabschnittes 62, 63 außer Eingriff verbracht.

Wie aus der Figur ersichtlich, ist der zweite Bandabschnitt 63 gegenüber dem ersten Bandabschnitt 62 verjüngend ausgebildet und ist die Bandbreite 58 am Anfang des am Ende des ersten Bandabschnittes 62 anschließenden zweiten Bandabschnittes 63 größer ausgebildet, als an seinem freien Ende.

Wie nun nicht näher dargestellt, besteht auch die Möglichkeit, dass das erste Verriegelungselement unmittelbar an der zweiten Breitseite 105 angeordnet ist, wobei dann dessen in zur Spannfläche 60 entgegengesetzter Richtung ausgerichteten Rastzähne 119 die Breitseitenfläche 61 überragend an der Breitseite 105 angeformt sind und das komplementär ausgebildete zweite Verriegelungselement am zweiten Bandabschnitt 63 ebenfalls an der zweiten Breitseite 105 angeordnet ist. Das zweite Verriegelungselement weist die Rastzähne 111 auf, die durch die in der zweiten Breitseite 105 im zweiten Bandabschnitt 63 eingeformten Vertiefungen 112 gebildet sind. Die geometrischen Verhältnisse der Rastzähne 111, 119 und Vertiefungen 112, 120 sind identisch zu der oben beschriebenen Ausführung ausgebildet. Das erste Verriegelungselement ist bevorzugt nur über einen Teil der Länge des ersten Bandabschnittes 62 an der zweiten Breitseite 105 ausgebildet, während das zweite Verriegelungselement bevorzugt über die gesamte Länge des zweiten Bandabschnittes 63 an der zweiten Breitseite 105 angeordnet ist. Natürlich kann das erste Verriegelungselement auch über die gesamte Länge des ersten Bandabschnittes 62 an der zweiten Breitseite 105 bzw. Breitseitenfläche 61 ausgebildet sein.

In der Fig. 11 ist das erfindungsgemäße Befestigungssystem 35 mit einer anderen Ausführungsvariante des Anschlussträgers 39 in Schnittdarstellung gezeigt. Das Befestigungssystem 35 weist wiederum den Anschlussträger 39 und das mit diesem mit einem Ende gelenkig verbundene Spannband 40 auf. Die unterschiedlichen Ausführungen des Spannbandes 40 wurden in den vorangegangenen Figuren bereits ausführlich beschrieben und kann bei dieser Ausführung des Befestigungssystems 35 verwendet werden.

Der Anschlussträger 39 weist eine Grundplatte 45 und wenigstens einen, bevorzugt zwei, von der Anlagefläche 41 frei vorkragende Seitenteile 47a, 47b auf. Der erste Seitenteil 47a ist im Bereich der ersten Querseitenfläche 52a mit der etwa rechteckförmigen Grundplatte 45 verbunden. Der erste Seitenteil 47a verläuft geneigt zur Anlagefläche 41 und schließt mit dieser einen Winkel 76 ein. Der Winkel 76 beträgt beispielsweise zwischen 30° und 70°, insbesondere 40° und 60°, beispielsweise 45°. Ebenso ist im ersten Seitenteil 47a zwischen dem Umlenkmittel 44 und der ersten Querseitenfläche 52a, die an das Umlenkmittel 44 angrenzende Ausnehmung 54a angeordnet.

Der zweite Seitenteil 47b ist im Bereich der zweiten Querseitenfläche 52b mit der Grundplatte 45 verbunden und ist wannenförmig ausgebildet. Die Stützfläche 51 für den festzubindenden Gegenstand oder das festzubindende Bündel ist dabei durch die ebenflächige Grundplatte 45 und dem etwa konkav gerundeten Seitenteil 47b gebildet. Diese Ausbildung des Befestigungssystems 35 eignet sich bestens für horizontal anzuordnende Gegenstände, da nach der Montage des Anschlussträgers 39 am Bauteil 36, insbesondere Mauerwerk, der wenigstens eine Gegenstand am wannenförmig ausgebildeten Seitenteil 47b aufgelegt werden kann, worauf das Spannband 40 tangential um den wenigstens einen Gegenstand gelegt und die beiden Bandabschnitte 62, 63 in formschlüssigen oder haftenden Eingriff miteinander verbracht werden. Sofern dieses Befestigungssystem 35 für die Vertikalmontage von Gegenständen verwendet wird, ist eine einfache Positionierung des oder der Gegenstände gegen den wannenförmig gekrümmten Seitenteil 47b möglich.

Abschließend sei noch darauf hingewiesen, dass das erfindungsgemäße Befestigungssystem 35 überall dort eingesetzt werden kann, wo ein oder mehrere längliche, flexible oder starre Gegenstände lösbar zu fixieren sind, also nicht nur auf Anwendungsgebiete eingeschränkt ist, bei denen Energie führende Leitungen festgebunden werden müssen, sondern auch in Einsatzgebieten Anwendung findet, bei denen ein länglicher Gegenstand positioniert gehaltert werden muss, beispielsweise eine Handhabe bzw. Griff eines Werkzeuges. Ebenso kann es zweckmäßig sein, dass der Anschlussträger 39 nach den Fig. 2 bis 7b; 10, 11 mit einer bei der Montage des Befestigungssystems 35 am Bauteil 36 eine Lage zu diesen positionierenden Verdrehsicherung versehen ist. Diese ist beispielsweise durch eine gegen den Bauteil 36 vorstehende und an der Grundplatte 45 angeordnete Verankerungsrippe oder eine vierkantige Durchgangsbohrung 68 gebildet.

Wie aus den Figuren ersichtlich, ist der Anschlussträger 39 bevorzugt mit ausschließlich einem einteiligen Spannband 40 versehen.

Das mit Vorteil einsetzbare Befestigungssystem findet uneingeschränkt Verwendung in nahezu allen technischen Gebieten und zeichnet sich durch die einfache Handhabung aus.

Die Ausführungsbeispiele zeigen mögliche Ausführungsvarianten des Befestigungssystems 35, wobei an dieser Stelle bemerkt sei, dass die Erfindung nicht auf die speziell dargestellten Ausfiihrungsvarianten derselben eingeschränkt ist, sondern vielmehr auch diverse Kombinationen der einzelnen Ausführungsvarianten untereinander möglich sind. Es sind also auch sämtliche denkbaren Ausfiihrungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus vom Befestigungssystem 35 dieses bzw. deren Bestandteile teilweise unmaßstäblich und/oder vergrößert und/oder verkleinert dargestellt wurden.

### Bezugszeichenaufstellung

- 1: Maschinenanlage
- 2: Bauteil
- 3: Werkstückträger
- 4: Gehäuseeinheit
- 5: Führungs- und/oder Kupplungsvorrichtung

- 6: Stirnplatte
- 7: Gehäuseteil
- 8: Aufstellfuß
- 9: Aufstandsfläche
- 10: Oberseite

- 11: Höhenführungsbahn
- 12: Seitenführungsbahn
- 13: Fahrbahnabschnitt
- 14: Vorschubvorrichtung
- 15: Transportmittel

- 16: Vorschubantrieb
- 17: Höhenführungsorgan
- 18: Seitenführungsorgan
- 19: Arbeitsstation
- 20: Umlenkrolle

- 21: Unterseite
- 22: Steuerleitung
- 23: Steuereinheit
- 24: Handhabungseinheit
- 25: Greifer

- 26: Steuerleitung
- 27: Versorgungsleitung
- 28: Sensor
- 29: Steuerleitung
- 30: Datenübertragungsleitung

- 31: Steuerleitung
- 32: Stromversorgungsleitung
- 35: Befestigungssystem

- 36: Bauteil
- 37: Tragprofil
- 38: Grundgestell
- 39: Anschlussträger
- 40: Spannband

- 41: Anlagefläche
- 42: Montagefläche
- 43: Abstand
- 44: Umlenkmittel
- 45: Grundplatte

- 46: Mittelebene
- 47a: Seitenteil
- 47b: Seitenteil
- 48a: Profilschenkel
- 48b: Profilschenkel
- 49a: Profilschenkel
- 49b: Profilschenkel
- 50: Winkel

- 51: Stützfläche
- 52a: Querseitenfläche
- 52b: Querseitenfläche
- 53: Längsseitenfläche
- 54a: Ausnehmung
- 54b: Ausnehmung
- 55: Breite

- 56: Dicke
- 57: Länge
- 58: Bandbreite
- 59a: Steg
- 59b: Steg
- 60: Spannfläche

- 61: Breitseitenfläche
- 62: Bandabschnitt
- 63: Bandabschnitt
- 64: Verbindungselement
- 65: Haftmittel

- 66: Halterung
- 67 .: Längsachse
- 68: Durchgangsbohrung
- 69: Sicke

- 71: Umschlingungswinkel
- 72: Wasserrohrleitung
- 73: Stirnfläche
- 74a: Führungsanordnung
- 74b: Führungsanordnung

- 76: Winkel
- 77: Befestigungsmittel
- 78: Kragarm
- 79a: Umfangsfläche
- 79b: Umfangsfläche
- 80a: Achse
- 80b: Achse

- 81: Führungsnut
- 82: Vorsprung
- 83: Abweiserfläche
- 84: Winkel
- 85: Schwenkachse,

- 86: Rückstellelement
- 87: Achszapfen
- 88: Bohrung
- 89: Mantelfläche
- 90: Rastarm

- 91: Längsnut
- 92: Schnapp- bzw. Rastvorrichtung
- 95: Rastnase

- 96: Tragkörper
- 98: Schlaufenbahn
- 99: Schlaufen
- 100: Hakenbahn

- 101: Haken
- 102: Beschichtung
- 104: erste Breitseite
- 105: zweite Breitseite
- 106: Schmalseite
- 110: Verriegelungskopf

- 111: Rastzahn
- 112: Vertiefung
- 113: Rastflanke
- 114: Flanke
- 115: Fortsatz

- 116: Seitenwand
- 118: Bandkanal
- 119: Rastzahn
- 120: Vertiefung

- 121: Rastflanke
- 122: Flanke

## Patentansprüche

1. Mehrteiliges Befestigungssystem (35) zum Festbinden wenigstens eines länglichen Gegenstandes, insbesondere einer elektrischen oder fluidführenden Versorgungsleitung, mit einem um den länglichen Gegenstand tangential geführten und diesen teilweise umschlingenden, flexiblen Spannband (40), und einem an einem Bauteil (36) befestigbaren Anschlussträger (39), der eine Grundplatte (45) mit einer gegen den Bauteil (36) abstützbaren, ebenflächigen Anlagefläche (41) aufweist und mit dem das flexible Spannband (40) mit seinem ersten Ende befestigt ist, **dadurch gekennzeichnet, dass** die Grundplatte (45) zusätzlich eine dem zu befestigenden Gegenstand zugewandte, zumindest bereichsweise zur Anlagefläche (41) parallele Stützfläche (51) zur Auflage des zumindest einen mittels des Spannbandes (40) zu befestigenden Gegenstandes aufweist und mit welcher Grundplatte (45) wenigstens ein über die Stützfläche (51) vorragender, erster Seitenteil (47a) verbunden ist, welcher mit einer Ausnehmung (54a) zum Durchtritt des flexiblen Spannbandes (40) versehen ist und ein Umlenkmittel (44) für das Spannband (40) ausbildet, welches Umlenkmittel (44) in einer zur Anlagefläche (41) mit Abstand (43) parallel verlaufenden Ebene und quer zur Längsrichtung des Spannbandes (40) angeordnet ist und dass das andere Ende des Spannbandes (40) ausgehend von der dem zu befestigenden Gegenstand zugewandten Seite am Umlenkmittel (44) umschlingend geführt wird, wobei der erste Seitenteil (47a) und eine zur Anlagefläche (41) senkrecht und zum Umlenkmittel (44) parallel verlaufende Mittelebene (46) einen Winkel zwischen 30° und 70° einschließen, um den wenigstens einen Gegenstand zwischen dem ersten Seitenteil (47a) und der Stützfläche (51) positionieren zu können.

2. Befestigungssystem nach Anspruch 1, **dadurch gekennzeichnet, dass** das Spannband (40) aus einem ersten Bandabschnitt (62) und einem zweiten Bandabschnitt (63) besteht, wobei der vom befestigten Ende bis zum Umlenkmittel (44) reichende, erste Bandabschnitt (62) und der um das Umlenkmittel (44) umschlingend geführte, zweite Bandabschnitt (63) mit im Bereich ihrer Breitseiten angeordneten und miteinander in Eingriff bringbaren Verriegelungselementen versehen sind.

3. Befestigungssystem nach Anspruch 2, **dadurch gekennzeichnet, dass** die Verriegelungselemente im ersten und zweiten Bandabschnitt (62, 63) auf der dem zu umschlingenden Gegenstand abgewandten Breitseite angeordnet sind und die Bandabschnitte (62, 63) der Breitseite gegenüberliegend, eine Spannfläche (60) für den Gegenstand ausbilden.

4. Befestigungssystem nach Anspruch 2, **dadurch gekennzeichnet, dass** das erste Verriegelungselement im ersten Bandabschnitt (62) auf der dem zu umschlingenden Gegenstand abgewandten Breitseite und das zweite Verriegelungselement im zweiten Bandabschnitt (63) auf der dem zu umschlingenden Gegenstand zugewandten Breitseite angeordnet sind und der erste Bandabschnitt (62) dem Verriegelungselement gegenüberliegend, eine Spannfläche (60) für den Gegenstand ausbildet.

5. Befestigungssystem nach einem der Ansprüche 2 bis 4, **dadurch gekennzeichnet, dass** die Verriegelungselemente jeweils nur über einen Teil der Länge des ersten und/oder zweiten Bandabschnittes (62, 63) angeordnet sind.

6. Befestigungssystem nach einem der Ansprüche 2 bis 4, **dadurch gekennzeichnet, dass** die Verriegelungselemente jeweils im wesentlichen über die gesamte Länge des ersten und/oder zweiten Bandabschnittes (62, 63) angeordnet sind.

7. Befestigungssystem nach Anspruch 4, **dadurch gekennzeichnet, dass** der erste Bandabschnitt (62) auf seiner der Spannfläche (60) gegenüberliegenden Breitseite (105) mit einem Verriegelungskopf (110) versehen ist, der einen Bandkanal (118) für das freie Ende des Spannbandes (40) und das in diesen hineinragende erste Verriegelungselement aufweist und dass das erste Verriegelungselement durch mehrere parallele Rastzähne (119) und das zweite Verriegelungselement durch mehrere an einer der Breitseiten (104; 105) des zweiten Bandabschnittes (63) angeordnete parallele und zu den Rastzähnen (119) komplementäre Vertiefungen (112) gebildet sind, wobei die Rastzähne (119) in die Vertiefungen (112) des durch den Bandkanal (118) gezogenen zweiten Bandabschnittes (63) formschlüssig eingreifen.

8. Befestigungssystem nach Anspruch 2, **dadurch gekennzeichnet, dass** die Verriegelungselemente gleichartig ausgebildet und durch ein in Richtung der Längserstreckung des Spannbandes (40) an der Breitseitenfläche (61) der beiden Bandabschnitte (62, 63) ununterbrochen durchlaufendes Haftmittel (65) eines das einteilige Spannband (40) bildenden Haftbandes, wie textiles Klettband oder Klebeband, gebildet sind.

9. Befestigungssystem nach Anspruch 8, **dadurch gekennzeichnet, dass** das Haftband einen Tragkörper (96) mit der im wesentlichen ebenen Breitseitenfläche (61) und die dieser gegenüberliegende Spannfläche (60) und das mit dem Tragkörper (96) verbundene Haftmittel (65) aufweist, wobei das Haftmittel (65) durch eine Vielzahl von über die Breitseitenfläche (61) verteilt angeordnete und diese überragende, durch Haken (101) und Schlaufen (99) gebildete, jeweils gleichartige Verhakungselemente und durch ein Gewebe oder Gewirke aus Kett- und Schussfäden gebildet ist und die von Fäden gebildeten Verhakungselemente mit dem ebenfalls gewebten oder gewirkten Tragkörper (96) verbunden, insbesondere in den Tragkörper (96) eingewebt oder eingewirkt, sind.

10. Befestigungssystem nach Anspruch 8, **dadurch gekennzeichnet, dass** das Haftmittel (65) durch eine Kleberschicht gebildet ist.

11. Befestigungssystem nach Anspruch 1, **dadurch gekennzeichnet, dass** der Anschlussträger (39) ein Befestigungsmittel (77) für das Spannband (40) aufweist und dass das Umlenkmittel (44) und Befestigungsmittel (77) in Bezug auf eine zur Anlagefläche (41) senkrecht und zum Umlenkmittel (44) parallel verlaufende Mittelebene (46) spiegelbildlich zueinander angeordnet sind.

12. Befestigungssystem nach Anspruch 11, **dadurch gekennzeichnet, dass** der Anschlussträger (39) einen von der Stützfläche (51) vorragenden, zweiten Seitenteil (47b) aufweist, der in Bezug auf die Mittelebene (46) bevorzugt spiegelbildlich zum ersten Seitenteil (47a) angeordnet und mit der Grundplatte (45) verbunden ist, wobei der zweite Seitenteil (47b) mit einer Ausnehmung (54b) zum Befestigen des ersten Endes vom Spannband (40) versehen ist.

13. Befestigungssystem nach Anspruch 1 oder 12, **dadurch gekennzeichnet, dass** die Ausnehmung (54a, 54b) einseitig geöffnet ist und einen U-förmigen Aufnahmeschlitz bildet.

14. Befestigungssystem nach Anspruch 1 oder 12, **dadurch gekennzeichnet, dass** die Ausnehmung (54a, 54b) als fensterartige Durchstecköffnung ausgebildet ist.

15. Befestigungssystem nach Anspruch 1 oder 12, **dadurch gekennzeichnet, dass** eine Breite (55) der Ausnehmung (54a, 54b) einem Mehrfachen einer Dicke (56) des Spannbandes (40) entspricht.

16. Befestigungssystem nach Anspruch 1 oder 12, **dadurch gekennzeichnet, dass** eine Länge (57) der Ausnehmung (54a, 54b) annähernd einer Bandbreite (58) des Spannbandes (40) entspricht.

17. Befestigungssystem nach Anspruch 1 oder 11, **dadurch gekennzeichnet, dass** erste und/oder zweite Seitenteil (47a, 47b) durch einen Kragarm (78) gebildet ist, an dessen freiem Ende das Umlenk- und/oder Befestigungsmittel (44, 77) angeordnet ist.

18. Befestigungssystem nach Anspruch 1 oder 11, **dadurch gekennzeichnet, dass** das Umlenk- und/oder Befestigungsmittel (44, 77) in etwa parallel zu dem zu befestigenden Gegenstand verläuft und eine Führungsanordnung (74a, 74b) für das Spannband (40) auf weist.

19. Befestigungssystem nach Anspruch 18, **dadurch gekennzeichnet, dass** die Führungsanordnung (74a, 74b) durch eine zumindest über einen Teilabschnitt der Umfangsfläche (79a, 79b) des Umlenk- und/oder Befestigungsmittels (44, 77) vertieft angeordnete Führungsnut (81) gebildet ist.

20. Befestigungssystem nach Anspruch 1 oder 11, **dadurch gekennzeichnet, dass** das Umlenk- und/oder Befestigungsmittel (44, 77) in Richtung der Mittelebene (46) relativ zu der Grundplatte (45) verstellbar ausgebildet ist.

21. Befestigungssystem nach Anspruch 20, **dadurch gekennzeichnet, dass** der Kragarm (78) mit dem Umlenk- und/oder Befestigungsmittel (44, 77) an der Grundplatte (45) schwenkbeweglich gelagert ist und eine Schwenkachse (85) parallel zur Anlagefläche (41) und quer zur Längsrichtung des Spannbandes (40) ausgerichtet ist und dass wenigstens ein Rückstellelement (86), insbesondere eine Drehfeder, zwischen dem Umlenk- und/oder Befestigungsmittel (44, 77) oder Kragarm (78) und der Grundplatte (45) angeordnet ist.

22. Befestigungssystem nach Anspruch 20, **dadurch gekennzeichnet, dass** das Umlenk- und/oder Befestigungsmittel (44, 77) jeweils mit dem Kragarm (78) an der Grundplatte (45) fest verbunden ist und dass der Kragarm (78) quer zu seiner Längserstreckung in Richtung der Mittelebene (46) biegeelastisch verformbar und in eine geradlinige Stellung selbsttätig rückstellbar oder plastisch verformbar ausgebildet ist.

23. Befestigungssystem nach Anspruch 1, **dadurch gekennzeichnet, dass** der Anschlussträger (39) mit einer Halterung (66) versehen ist und über diese Halterung (66) lösbar mit dem Bauteil (36), beispielsweise an einem Tragprofil (37) eines Grundgestelles (38) einer Maschinenanlage (1) oder an einer Baufläche eines Gebäudes, verbunden ist.

24. Befestigungssystem nach Anspruch 23, **dadurch gekennzeichnet, dass** die Halterung (66) durch eine mit der Grundplatte (45) verbundene Schnapp- bzw. Rastvorrichtung (92) gebildet ist, wobei die Schnapp- bzw. Rastvorrichtung (92) zumindest zwei an der Anlagefläche (41) im wesentlichen senkrecht vorragende und etwa parallel zueinander verlaufende Rastarme (90) ausbildet und die Rastarme (90) jeweils am freien Ende eine quer zu seiner Längserstreckung verlaufende und eine Seitenfläche vom Rastarm (90) überragende, gegebenenfalls den Bauteil (36) formschlüssig hintergreifende Rastnase (95) umfasst.

25. Befestigungssystem nach Anspruch 1, **dadurch gekennzeichnet, dass** das Spannband (40) in Längsrichtung elastisch dehnbar ausgebildet ist.

26. Befestigungssystem nach Anspruch 3 oder 4, **dadurch gekennzeichnet, dass** die Spannfläche (60) mit einer Beschichtung (102) mit hohem Reibungskoeffizienten, beispielsweise einer Gummibeschichtung, versehen ist.

27. Befestigungssystem nach Anspruch 1, **dadurch gekennzeichnet, dass** das Spannband (40) in Richtung seiner Längserstreckung mit unterschiedliche Biegesteifigkeiten aufweisenden Abschnittsbereichen ausgebildet ist

28. Befestigungssystem nach Anspruch 1 oder 2, **dadurch gekennzeichnet, dass** das Spannband (40) mit einem Ende mit dem Anschlussträger (39) verbunden und der erste und zweite Bandabschnitt (62, 63) vom Spannband (40) in entgegengesetzte Richtungen gebogen, insbesondere S-förinig ausgebildet ist.

## Claims

1. Multi-part fixing system (35) for strapping at least one long object, in particular a supply line carrying electric power or fluid, with a flexible clamping strap (40) placed at a tangent around the long object and at least partially surrounding it, and a mounting support (39) which can be attached to a component (36), comprising a base plate (45) with a flat abutment surface (41) which can be supported against the component (36), and to which the flexible clamping strap (40) is secured by its first end, **characterised in that** the base plate (45) additionally has a support surface (51) facing the object to be strapped, parallel with at least some regions of the abutment surface (41), for bearing the at least one object to be strapped by means of the clamping strap (40), and to which base plate (45) at least a first side part (47a) projecting out from the support surface (51) is connected, which is provided with a cut-out (54a) forming a deflection means (44) for the clamping strap (40) through which the flexible clamping strap (40) can be inserted, which deflection means (44) is disposed at a distance (43) from and in a plane extending parallel with the abutment surface (41) and transversely to the longitudinal direction of the clamping strap (40), and the other end of the clamping strap (40) is fed around the deflection means (44) from the side facing the object to be strapped, and the first side part (47a) and a mid-plane (46) extending perpendicular to the abutment surface (41) and parallel with the deflection means (44) subtend an angle of between 30° and 70° to enable the at least one object to be positioned between the first side part (47a) and the support surface (51).

2. Fixing system as claimed in claim 1, **characterised in that** the clamping strap (40) comprises a first strap portion (62) and a second strap portion (63), and the first strap portion (62) extending from the secured end to the deflection means (44) and the second strap portion (63) fed around the deflection means (44) are provided with locking elements disposed in a region of their widthways surfaces which can be moved into engagement with one another.

3. Fixing system as claimed in claim 2, **characterised in that** the locking elements are disposed in the first and second strap portion (62, 63) on the widthways face remote from the object to be strapped and the strap portions (62, 63) lying opposite the widthways face form a clamping surface (60) for the object.

4. Fixing system as claimed in claim 2, **characterised in that** the first locking element is disposed in the first strap portion (62) on the widthways face remote from the object to be strapped and the second locking element is disposed in the second strap portion (63) on the widthways face directed towards the object to be strapped, and the first strap portion (62) lying opposite the locking element forms a clamping surface (60) for the object.

5. Fixing system as claimed in one of claims 2 to 4, **characterised in that** the locking elements respectively extend across only a part of the length of the first and/or second strap portion (62, 63).

6. Fixing system as claimed in one of claims 2 to 4, **characterised in that** the locking elements extend essentially across the entire length of the first and/or second strap portion (62, 63).

7. Fixing system as claimed in claim 4, **characterised in that** the first strap portion (62) is provided with a lock head (110) on its widthways face (105) lying opposite the clamping surface (60), which has a strap passage (118) for the free end of the clamping strap (40) and the first locking element projecting into it, and the first locking element comprises several parallel catch teeth (119) and the second locking element comprises several parallel recesses (112) complementing the catch teeth (119) disposed on the widthways faces (104, 105) of the second strap portion (63), and the catch teeth (119) positively engage in the recesses (112) of the second strap portion (63) pulled through the strap passage (118).

8. Fixing system as claimed in claim 2, **characterised in that** the locking elements are of an identical design and are provided in the form of adhering means (65) of an adhering strap constituting the one-piece clamping strap (40), such as a textile strap with burrs or adhesive tape, extending uninterrupted and continuously on the widthways surface (61) of the two strap portions (62, 63) in the direction of longitudinal extension of the clamping strap (40).

9. Fixing system as claimed in claim 8, **characterised in that** the adhering strap has a support body (96) comprising the essentially flat widthways face (61) and the clamping surface (60) lying opposite it and the adhering means (65) joined to the support body (96), and the adhering means (65) comprises a plurality of respective hooking elements of the same type in the form of hooks (101) and loops (99) distributed across the widthways surface (61) and standing proud of it and a woven fabric or knitted fabric comprising warp threads and weft threads, and the hooking elements formed by threads are connected to the likewise woven or knitted support body (96), in particular are woven or knitted into the support body (96).

10. Fixing system as claimed in claim 8, **characterised in that** the adhering means (65) comprises a layer of adhesive.

11. Fixing system as claimed in claim 1, **characterised in that** the mounting support (39) has a fixing means (77) for the clamping strap (40), and the deflection means (44) and fixing means (77) are disposed symmetrically in mirror image with respect to one another by reference to a mid-plane (46) extending perpendicular to the abutment surface (41) and parallel with the deflection means (44).

12. Fixing system as claimed in claim 11, **characterised in that** the mounting support (39) has a second side part (47b) projecting out from the support surface (51), which is preferably disposed in mirror image with the first side part (47a) by reference to the mid-plane (46) and is connected to the base plate (45), and the second side part (47b) is provided with a cut-out (54b) for securing the first end of the clamping strap (40).

13. Fixing system as claimed in claim 1 or 12, **characterised in that** the cut-out (54a, 54b) is open at one end and forms a U-shaped housing slot.

14. Fixing system as claimed in claim 1 or 12, **characterised in that** the cut-out (54a, 54b) is provided in the form of a window-type insertion orifice.

15. Fixing system as claimed in claim 1 or 12, **characterised in that** a width (55) of the cut-out (54a, 54b) corresponds to a multiple of a thickness (56) of the clamping strap (40).

16. Fixing system as claimed in claim 1 or 12, **characterised in that** a length (57) of the cut-out (54a, 54b) corresponds to approximately a strap width (58) of the clamping strap (40).

17. Fixing system as claimed in claim 1 or 11, **characterised in that** the first and/or second side part (47a, 47b) comprises a cantilever arm (78), on the free end of which the deflection and/or fixing means (44, 77) is disposed.

18. Fixing system as claimed in claim 1 or 11, **characterised in that** the deflection and/or fixing means (44, 77) extends more or less parallel with the object to be strapped and has a guide arrangement (74a, 74b) for the clamping strap (40).

19. Fixing system as claimed in claim 18, **characterised in that** the guide arrangement (74a, 74b) comprises a guide groove (81) recessed into at least a part-portion of the circumferential surface (79a, 79b) of the deflection and/or fixing means (44, 77).

20. Fixing system as claimed in claim 1 or 11, **characterised in that** the deflection and/or fixing means (44, 77) is displaceable relative to the base plate (45) in the direction of the mid-plane (46).

21. Fixing system as claimed in claim 20, **characterised in that** the cantilever arm (78) with the deflection and/or fixing means (44, 77) is pivotably mounted on the base plate (45) and a pivot axis (85) is oriented parallel with the abutment surface (41) and transversely to the longitudinal direction of the clamping strap (40), and at least one return element (86), in particular a rotary spring, is disposed between the deflection and/or fixing means (44, 77) or cantilever arm (78) and the base plate (45).

22. Fixing system as claimed in claim 20, **characterised in that** the deflection and/or fixing means (44, 77) with the respective cantilever arm (78) is fixedly connected to the base plate (45) and the cantilever arm (78) is elastically deformable in the direction of the mid-plane (46) transversely to its longitudinal extension and is able to rebound automatically into a straight position or is plastically deformable.

23. Fixing system as claimed in claim 1, **characterised in that** the mounting support (39) is provided with a retaining means (66) and this retaining means (66) is releasably connected to the component (36), for example on a support section (37) of a base frame (38) of a machine unit (1) or on a building surface of a building.

24. Fixing system as claimed in claim 23, **characterised in that** the retaining means (66) is provided in the form of a snapper or catch mechanism (92) connected to the base plate (45), and the snapper or catch mechanism (92) comprises at least two more or less mutually parallel catch arms (90) projecting essentially vertically out from the abutment surface (41), and the catch arms (90) each have a catch lug (95) at the free end, extending transversely to their longitudinal extension, extending across a side face of the catch arm (90) which may optionally positively engage behind the component (36).

25. Fixing system as claimed in claim 1, **characterised in that** the clamping strap (40) is elastically stretchable in the longitudinal direction.

26. Fixing system as claimed in claim 3 or 4, **characterised in that** the clamping surface (60) is provided with a coating (102) with a high coefficient of friction, for example a rubber coating.

27. Fixing system as claimed in claim 1, **characterised in that** the clamping strap (40) has regional parts with differing bending strengths in the direction of its longitudinal extension.

28. Fixing system as claimed in claim 1 or 2, **characterised in that** the clamping strap (40) is connected to the mounting support (39) by one end and the first and second strap portion (62, 63) of the clamping strap (40) are shaped so that they curve in opposite directions, in particular are S-shaped.

## Revendications

1. Système de fixation en plusieurs parties (35) pour attacher en liant au moins un objet oblong, en particulier une ligne d'alimentation électrique ou guidant un fluide, avec une bande de serrage flexible (40) guidée tangentiellement autour de l'objet oblong et entourant celui-ci partiellement, et un support de connexion (39) pouvant être fixé à un composant (36), qui présente une plaque de base (45) avec une face d'application plane (41) pouvant s'appuyer contre le composant (36) et avec lequel la bande de serrage flexible (40) est fixée avec sa première extrémité, **caractérisé en ce que** la plaque de base (45) présente additionnellement une face d'appui (51) orientée vers l'objet à fixer, parallèle au moins par zone à la face d'application (41) pour le support d'au moins un objet à fixer au moyen de la bande de serrage (40), et à la plaque de base (45) est relié au moins une première partie latérale (47a) faisant saillie sur la face d'appui (51), qui présente un évidement (54a) pour le passage de la bande de serrage flexible (40) et réalise un moyen de renvoi (44) pour la bande de serrage (40), ledit moyen de renvoi (44) étant disposé dans un plan s'étendant parallèlement à la face d'application (41) avec un écart (43) et transversalement à la direction longitudinale de la bande de serrage (40), et **en ce que** l'autre extrémité de la bande de serrage (40), en partant du côté orienté vers l'objet à fixer, est guidée au moyen de renvoi (44) en l'entourant, où la première partie latérale (47a) et un plan médian (46) s'étendant perpendiculairement à la face d'application (41) et parallèlement au moyen de renvoi (44) forment un angle entre 30° et 70° pour pouvoir positionner au moins un objet entre la première partie latérale (47a) et la face d'appui (51).

2. Système de fixation selon la revendication 1, **caractérisé en ce que** la bande de serrage (40) est constituée d'une première section de bande (62) et d'une seconde section de bande (63), où la première section de bande (62) s'étendant de l'extrémité fixée jusqu'au moyen de renvoi (44) et la seconde section de bande (63) guidée de façon à entourer le moyen de renvoi (44) sont pourvues d'éléments de verrouillage disposés dans la zone de leurs côtés larges et pouvant être mis en prise.

3. Système de fixation selon la revendication 2, **caractérisé en ce que** les éléments de verrouillage dans la première et la seconde section de bande (62, 63) sont disposés au côté large éloigné de l'objet à entourer et que les sections de bande (62, 63), en étant opposées au côté large, réalisent une face de serrage (60) pour l'objet.

4. Système de fixation selon la revendication 2, **caractérisé en ce que** le premier élément de verrouillage est disposé dans la première section de bande (62) au côté large éloigné de l'objet à entourer et le deuxième élément de verrouillage dans la seconde section de bande (63) au côté large orienté vers l'objet à entourer, et la première section de bande (62), opposée à l'élément de verrouillage, forme une face de serrage (60) pour l'objet.

5. Système de fixation selon l'une des revendications 2 à 4, **caractérisé en ce que** les éléments de verrouillage sont disposés respectivement seulement sur une partie de la longueur de la première et/ou deuxième section de bande (62, 63).

6. Système de fixation selon l'une des revendications 2 à 4, **caractérisé en ce que** les éléments de verrouillage sont disposés respectivement essentiellement sur toute la longueur de la première et/ou seconde section de bande (62, 63).

7. Système de fixation selon la revendication 4, **caractérisé en ce que** la première section de bande (62) présente à son côté large (105) opposé à la face de serrage (60) un bouton de verrouillage (110), qui présente un canal de bande (118) pour l'extrémité libre de la bande de serrage (40) et le premier élément de verrouillage faisant saillie dans celui-ci, et **en ce que** le premier élément de verrouillage est réalisé par plusieurs dents d'encliquetage parallèles (119) et le deuxième élément de verrouillage par plusieurs creux (112) disposés à l'un des côtés larges (104, 105) de la seconde section de bande (63), parallèles, et complémentaires aux dents d'encliquetage (119), où les dents d'encliquetage (119) s'engagent par concordance des formes dans les creux (112)de la seconde section de bande (63) tirée à travers le canal de bande (118).

8. Système de fixation selon la revendication 2, **caractérisé en ce que** les éléments de verrouillage sont réalisés d'une manière identique et sont formés par un moyen d'adhésion (65) s'étendant d'une manière ininterrompue dans la direction de l'extension longitudinale de la bande de serrage (40) à la face côté large (61) des deux sections de bande (62, 63) d'une bande d'adhésion formant la bande de serrage d'une seule partie (40), comme une bande textile auto-accrochante ou bande collante.

9. Système de fixation selon la revendication 8, **caractérisé en ce que** la bande d'adhésion présente un corps de support (96) avec la face côté large (61) sensiblement plane et la face de serrage (60) opposée à celle-ci et le moyen d'adhésion (65) relié au corps de support (96), où le moyen d'adhésion (65) est formé par une pluralité d'éléments d'accrochage répartis sur la face côté large (61) et faisant saillie sur celle-ci, formés par des crochets (101) et des boucles (99), respectivement identiques, et par un tissu ou tissu à mailles en fils de chaîne et de trame, et les éléments d'accrochage formés par des fils sont également reliés au corps de support tissé ou tricoté (96), en particulier sont tissés ou tricotés dans le corps de support (96).

10. Système de fixation selon la revendication 8, **caractérisé en ce que** le moyen d'adhésion (65) est formé par une couche de colle.

11. Système de fixation selon la revendication 1, **caractérisé en ce que** le support de connexion (39) présente un moyen de fixation (77) pour la bande de serrage (40), et **en ce que** le moyen de renvoi (44) et le moyen de fixation (77), relativement à un plan médian (46) s'étendant perpendiculairement à la face d'application (41) et parallèlement au moyen de renvoi (44) sont disposés d'une manière spéculairement identique l'un à l'autre.

12. Système de fixation selon la revendication 11, **caractérisé en ce que** le support de connexion (39) présente une deuxième partie latérale (47b) faisant saillie de la face d'appui (51) qui, par rapport au plan médian (46) est disposé de préférence d'une manière spéculairement identique à la première partie latérale (47a) et est relié à la plaque de base (45), où la deuxième partie latérale (47b) présente un évidement (54b) pour la fixation de la première extrémité de la bande de serrage (40).

13. Système de fixation selon la revendication 1 ou 12, **caractérisé en ce que** l'évidement (54a, 54b) est ouvert d'un côté et forme une fente de réception en forme de U.

14. Système de fixation selon la revendication 1 ou 12, **caractérisé en ce que** l'évidement (54a, 54b) est réalisé comme ouverture de passage semblable à une fenêtre.

15. Système de fixation selon la revendication 1 ou 12, **caractérisé en ce qu'**une largeur (55) de l'évidement (54a, 54b) correspond à un multiple d'une épaisseur (56) de la bande de serrage (40).

16. Système de fixation selon la revendication 1 ou 12, **caractérisé en ce qu'**une longueur (57) de l'évidement (54a, 54b) correspond approximativement à une largeur de bande (58) de la bande de serrage (40).

17. Système de fixation selon la revendication 1 ou 11, **caractérisé en ce que** la première et/ou deuxième partie latérale (47a, 47b) est formée par un bras en porte-à-faux (78), à l'extrémité libre duquel est disposé le moyen de renvoi et/ou de fixation (44, 77).

18. Système de fixation selon la revendication 1 ou 11, **caractérisé en ce que** le moyen de renvoi et/ou de fixation (44, 77) s'étend à peu près parallèlement à l'objet à fixer et présente un agencement de guidage (74a, 74b) pour la bande de serrage (40).

19. Système de fixation selon la revendication 18, **caractérisé en ce que** l'agencement de guidage (74a, 74b) est formé par une rainure de guidage (81) disposée en creux sur au moins une section partielle de la face périphérique (79a, 79b) du moyen de renvoi et/ou de fixation (44, 77).

20. Système de fixation selon la revendication 1 ou 11, **caractérisé en ce que** le moyen de renvoi et/ou de fixation (44, 77) est ajustable dans la direction du plan médian (46) relativement à la plaque de base (45).

21. Système de fixation selon la revendication 20, **caractérisé en ce que** le bras en porte-à-faux (78) avec le moyen de renvoi et/ou de fixation (44, 77) est logé d'une manière pivotante à la plaque de base (45) et qu'un axe de pivotement (85) est orienté parallèlement à la face d'application (41) et transversalement à la direction longitudinale de la bande de serrage (40), et **en ce qu'**au moins un élément de rappel (86), en particulier un ressort de torsion, est disposé entre le moyen de renvoi et/ou de fixation (44, 77) ou le bras en porte-à-faux (78) et la plaque de base (45).

22. Système de fixation selon la revendication 20, **caractérisé en ce que** le moyen de renvoi et/ou de fixation (44, 77) est relié fixement respectivement avec le bras en porte-à-faux (78) à la plaque de base (45), et **en ce que** le bras en porte-à-faux (78) est déformable élastiquement en flexion transversalement à son extension longitudinale dans la direction du plan médian (46), et est réalisé de façon à pouvoir être rappelé automatiquement ou à être déformable plastiquement dans une position rectiligne.

23. Système de fixation selon la revendication 1, **caractérisé en ce que** le support de connexion (39) présente une fixation (66) et est relié par cette fixation (66) amoviblement au composant (36), par exemple à un profilé porteur (37) d'un bâti de base (38) d'une installation de machine (1) ou à une face de construction d'un bâtiment.

24. Système de fixation selon la revendication 23, **caractérisé en ce que** la fixation (66) est formée par un dispositif d'enclenchement respectivement d'encliquetage (92) relié à la plaque de base (45), où le dispositif d'enclenchement respectivement d'encliquetage (92) réalise au moins deux bras en porte-à-faux (90) faisant saillie d'une manière sensiblement perpendiculaire à la face d'application (41) et s'étendant à peu près parallèlement l'un à l'autre, et que les bras d'encliquetage (90) respectivement à l'extrémité libre, comprennent un ergot d'encliquetage (95) s'étendant transversalement à son extension longitudinale et faisant saillie sur une face latérale du bras d'encliquetage (90), passant le cas échéant par concordance des formes derrière le composant (36).

25. Système de fixation selon la revendication 1, **caractérisé en ce que** la bande de serrage (40) est réalisée d'une manière extensible élastiquement dans la direction longitudinale.

26. Système de fixation selon la revendication 3 ou 4, **caractérisé en ce que** la face de serrage (60) est pourvue d'un revêtement (102) d'un coefficient de friction élevé, par exemple d'un revêtement en caoutchouc.

27. Système de fixation selon la revendication 1, **caractérisé en ce que** la bande de serrage (40) est réalisée dans la direction de son extension longitudinale avec des zones de section ayant des rigidités différentes en flexion.

28. Système de fixation selon la revendication 1 ou 2, **caractérisé en ce que** la bande de serrage (40) est reliée avec une extrémité au support de connexion (39) et que la première et la seconde section de bande (62, 63) de la bande de serrage (40) est courbée dans des directions opposées, en particulier en forme de S.
